# EUROPÄISCHE PATENTSCHRIFT

(11) **EP 3 344 915 B1**
(45) Veröffentlichungstag und Bekanntmachung des Hinweises auf die Patenterteilung: **09.03.2022**
(21) Anmeldenummer: 16756638.9
(22) Anmeldetag: 10.08.2016
(51) Int. Cl.: B60Q 1/26, F21S 43/14, F21S 43/20, F21S 43/31

(54) **FAHRZEUGLEUCHTE UND VERFAHREN ZUM BEREITSTELLEN EINER LICHTFUNKTION MITTELS EINER FAHRZEUGLEUCHTE**
VEHICLE LIGHT AND METHOD FOR PROVIDING A LIGHT FUNCTION BY MEANS OF A VEHICLE LIGHT
DISPOSITIF D'ÉCLAIRAGE DE VÉHICULE ET PROCÉDÉ DE FOURNITURE D'UNE FONCTION D'ÉCLAIRAGE AU MOYEN D'UN DISPOSITIF D'ÉCLAIRAGE DE VÉHICULE

(30) Priorität: 02.09.2015 DE 102015216744
(43) Veröffentlichungstag der Anmeldung: 11.07.2018
(73) Patentinhaber: Volkswagen Aktiengesellschaft, 38440 Wolfsburg (DE)
(72) Erfinder: STUDENY, Christian, 38104 Braunschweig (DE); MÜLLER, Michael, 38518 Gifhorn (DE)
(86) Internationale Anmeldenummer: PCT/EP2016/069017
(87) Internationale Veröffentlichungsnummer: WO 2017/036753

(56) Entgegenhaltungen:
- WO-A1-2016/041675
- WO-A2-2014/105408
- DE-A1- 10 101 795
- DE-A1-102005 033 684
- DE-A1-102008 057 538
- DE-A1-102012 019 941
- US-A1- 2004 136 196
- US-A1- 2014 056 008

## Beschreibung

Die vorliegende Erfindung betrifft eine Fahrzeugleuchte mit den Merkmalen vom Oberbegriff des Patentanspruchs 1. Sie betrifft auch ein Verfahren zum Bereitstellen einer Lichtfunktion mittels einer solchen Fahrzeugleuchte.

Die DE 10 2008 057 538 A1 beschreibt eine derartige Fahrzeugleuchte. Konkret weist die Fahrzeugleuchte mehrere durch Reflektoren gebildete Lichtkammern auf. Jedem Reflektor ist eine erste, innerhalb des Reflektors befindliche Lichtquelle und eine zweite, außerhalb bzw. hinter oder unterhalb des Reflektors befindliche Lichtquelle zugeordnet. Durch die erste Lichtquelle, welche im Brennpunkt des Reflektors liegt, wird eine Lichtfunktion mit übergeordneter Prioritat (bspw. ein Bremslicht) erzeugt. Mit Hilfe der zweiten Lichtquelle wird eine zweite Lichtfunktion mit untergeordneter Priorität (bspw. ein Schlusslicht) realisiert. Unter anderem wird vorgeschlagen, dass das von der zweiten Lichtquelle erzeugte Licht über eine als eigenständiges Bauteil ausgeführte Lichtleitereinheit bis zu einem Durchbruch des Reflektors geführt und dort direkt in die Lichtkammer eingekoppelt wird.

Der US 2014/056008 A1 ist eine Fahrzeugleuchte zu entnehmen, welche einen Reflektor mit mehreren Facetten aufweist. Die Facetten lenken divergierende Lichtstrahlen einer ersten Lichtquelle mit jeweils stark voneinander abweichenden Austrittswinkeln durch eine Abschlussscheibe. Dies führt zu einem Funkeleffekt, der durch eine Relativbewegung eines Betrachters relativ zur Fahrzeugleuchte verursacht wird.

In der nachveröffentlichten WO 2016/041675 A1 wird eine Fahrzeugleuchte mit mehreren Lichtquellen bekannt, die mit den Facetten eines Reflektors aktiv eine Lichtfunktion mit einem wahrnehmbaren Funkeln erzeugen kann.

Die US 6,857,769 B2 offenbart eine Fahrzeugleuchte, bei der zwei Lichtquellen durch einen halbdurchlässigen, spiegelnden Streifen voneinander getrennt sind. Eine erste Lichtquelle ist der Lichtfunktion eines Abblendlichtes zugeordnet, eine zweite Lichtquelle der Lichtfunktion eines Parklichts. Die Lichtstrahlen der ersten Lichtquelle treten durch den halbdurchlässigen, spiegelnden Streifen hindurch, während die Lichtstrahlen der zweiten Lichtquelle am Streifen gespiegelt und somit in Fahrtrichtung umgelenkt werden. Auf diese Weise sollen in einem vergleichsweise kleinen Gehäuse mehrere Lichtfunktionen realisierbar sein.

Auch in der WO 2010/120251 A1 wird eine Fahrzeugleuchte offenbart. Bei der beschriebenen Fahrzeugleuchte sind zwei Reflektoren in einem Gehäuse auf einer gemeinsamen optischen Achse hintereinander positioniert. Jedem Reflektor ist eine Lichtquelle zugeordnet. Der vordere Reflektor weist Aussparungen aus, durch die reflektierte Lichtstrahlen der dem hinteren Reflektor zugeordneten Lichtquelle nach vorne austreten können. Auch dies soll zu einer kompakten Bauweise der Fahrzeugleuchte führen.

Schließlich ist aus der DE 10 2012 005 826 A1 eine Fahrzeugleuchte mit einem speziell ausgebildeten Optikelement bekannt. Konkret weist das Optikelement eine Lichteinkoppelfläche zum Einkoppeln der Lichtemission einer Lichtquelle und eine Auskoppelstruktur auf, bei welcher die Richtungen der eingekoppelten Lichtstrahlen so verändert werden, dass eine Abstrahlcharakteristik erzeugt wird, die sich von der Abstrahlcharakteristik der Lichtemission der Lichtquelle der Fahrzeugleuchte unterscheidet. Die Auskoppelstruktur umfasst eine Vielzahl von Facettenflächen, bei denen Lichtstrahlen in einem Abstrahlwinkel ausgekoppelt werden, der von der jeweiligen Winkelausrichtung der Facettenfläche abhängt. Die Facettenflächen sind in unterschiedlichen Winkeln zueinander in einem sich nicht wiederholenden Muster angeordnet. Durch die Gestaltung der Facettenflächen der Auskoppelstruktur wird mittels des Optikelements ein Glitzereffekt erzeugt, bei dem der Betrachter bei variierenden Betrachtungspositionen und Betrachtungswinkeln keine gleichmäßig leuchtende Fläche wahrnimmt.

Fahrzeugleuchten müssen eine Vielzahl von Lichtfunktionen in einem Gehäuse vereinen. Dabei hat die Anzahl der erforderlichen Lichtfunktionen zugenommen. Dennoch wird aufgrund von Package- und Designvorgaben der zur Verfügung stehende Platz immer geringer. Es sind daher Lösungen wünschenswert, die zu einem kompakten Aufbau von Fahrzeugleuchten mit mehreren Lichtfunktionen beitragen.

Der vorliegenden Erfindung liegt die Aufgabe zugrunde, eine alternative Fahrzeugleuchte bereitzustellen, die trotz der Realisierung wenigstens zweier Lichtfunktionen kompakt aufgebaut sein kann.

Erfindungsgemäß wird diese Aufgabe durch eine Fahrzeugleuchte mit den Merkmalen des Anspruchs 1 gelöst. Vorteilhafte Ausgestaltungen und Weiterbildungen ergeben sich aus den abhängigen Ansprüchen.

Die Erfindung geht aus von einer Fahrzeugleuchte mit wenigstens einem Reflektor, dem wenigstens eine erste Lichtquelle zugeordnet ist, wobei die Richtung von emittierten Lichtstrahlen der wenigstens einen ersten Lichtquelle durch den Reflektor derart in Richtung einer bestimmten, von der Fahrzeugleuchte entfernten Betrachtungsposition umlenkbar ist, dass dort wenigstens eine erste Lichtfunktion wahrnehmbar ist. Es ist wenigstens eine weitere Lichtquelle vorhanden, von der Lichtstrahlen emittierbar sind, durch die in der Betrachtungsposition wenigstens eine zweite Lichtfunktion wahrnehmbar ist.

Ferner ist die wenigstens eine weitere Lichtquelle auf einer der Betrachtungsposition abgewandten Seite des Reflektors vorhanden und zwischen der wenigstens einen weiteren Lichtquelle und dem Reflektor ist wenigstens ein weiteres, lichtlenkendes Bauteil angeordnet. Das lichtlenkende Bauteil ist mit dem Reflektor verbunden, derart, dass von der wenigstens einen weiteren Lichtquelle emittierte Lichtstrahlen durch das wenigstens eine weitere, lichtlenkende Bauteil gelangen und das lichtlenkende Bauteil zur Realisierung wenigstens der einen zweiten Lichtfunktion auf einer der Betrachtungsposition zugewandten Seite des Reflektors wieder verlassen können.

Eine Verwirklichung der Erfindung schlägt nun vor, dass das wenigstens eine weitere, lichtlenkende Bauteil eine Lichtaustrittsseite mit einer solchen Oberfläche aufweist, die der optischen Anmutung einer Oberfläche des Reflektors gleich oder zumindest ähnlich ist. So kann die Oberfläche der Lichtaustrittsseite beispielsweise auch mit Facettenflächen bzw. mit einer facettenartigen Struktur versehen sein. Diese werden, je nach zu erzeugender Lichtverteilung für die wenigstens eine weitere Lichtfunktion, jedoch in ihrer Positionierung und Ausrichtung anders berechnet, was aber einem Betrachter beim optischen Gesamteindruck der Fahrzeugleuchte nicht auffällt.

Dies trägt zu einem optisch angenehmeren Erscheinungsbild der Fahrzeugleuchte bei.

Zu gleichen Zweck kann alternativ oder zusätzlich in einer ersten zweckmäßigen Ausgestaltung der Erfindung das wenigstens eine weitere, lichtlenkende Bauteil eine Lichtaustrittsseite mit einer solchen Oberfläche aufweisen, die mit einer Oberfläche des Reflektors in etwa bündig ist. Abweichend davon ist aber auch denkbar, dass die Oberfläche der Lichtaustrittsseite mit einer Oberfläche des Reflektors nicht bündig ist und beispielsweise in Lichtabstrahlrichtung gesehen aus der Oberfläche des Reflektors herausragt. Hierdurch kann ein außergewöhnliches Aussehen der Fahrzeugleuchte, insbesondere bei ausgeschalteter Fahrzeugleuchte geschaffen werden.

Als lichtlenkendes Bauteil im Sinne der Erfindung ist jedes Bauteil zu verstehen, welches in dieses eintretende Lichtstrahlen ablenkt. Die Ablenkung kann beispielsweise eine Brechung, eine Beugung oder auch eine Reflexion der Lichtstrahlen sein. Das lichtlenkende Bauteil kann zum Beispiel als ein Kollimator, eine Sammellinse oder auch als Lichtleiter ausgebildet sein, wobei auch Kombinationen derartiger Bauteile denkbar sind.

Auf diese Weise ist die Schaffung einer kompakten Fahrzeugleuchte möglich, obwohl durch die Fahrzeugleuchte mehrere Lichtfunktionen überlagerbar sind. Durch die wenigstens eine weitere Lichtquelle auf einer der Betrachtungsposition abgewandten Seite des Optikelementes und durch das wenigstens eine weitere, lichtlenkende Bauteil, welches mit dem Reflektor verbunden ist, kann auf einfache Weise wenigstens eine zweite Lichtfunktion realisiert werden, die der ersten Lichtfunktion überlagert werden kann.

Wenn die Fahrzeugleuchte beispielsweise als Heckleuchte ausgebildet ist, so ist zum Beispiel denkbar, dass durch die am Reflektor reflektierten Lichtstrahlen die Lichtfunktion eines Schlusslichtes realisiert wird. Durch die durch das wenigstens eine weitere, lichtlenkende Bauteil gelangenden Lichtstrahlen der wenigstens einen weiteren Lichtquelle kann die Lichtfunktion eines Bremslichtes, eines Rückfahrlichts, eines Nebelschlusslichts und/oder eines Fahrtrichtungsanzeigers realisiert werden.

Ist die Fahrzeugleuchte beispielsweise als Scheinwerfer ausgebildet ist, so ist es zum Beispiel möglich, dass durch die am Reflektor reflektierten Lichtstrahlen die Lichtfunktion eines Abblendlichtes realisiert wird. Durch die durch das wenigstens eine weitere, lichtlenkende Bauteil gelangenden Lichtstrahlen der wenigstens einen weiteren Lichtquelle kann die Lichtfunktion eines Fernlichts, eines Fahrtrichtungsanzeigers, eines Nebellichts und/oder auch eines Tagfahrlichts realisiert werden.

Fahrzeugleuchten tragen in zunehmendem Maße zum Design des Fahrzeugs bei. Durch die Gestaltung der Fahrzeugleuchte soll dem Fahrzeug insbesondere ein charakteristisches Erscheinungsbild verliehen werden, welches leicht wiedererkannt wird und durch welches sich das Fahrzeug von dem Design anderer Fahrzeuge unterscheidet.

Gemäß einer höchst zweckmäßigen Weiterbildung der Erfindung weist die Fahrzeugleuchte daher zumindest drei bei verschiedenen Positionen angeordnete Lichtquellen auf und der Reflektor eine Vielzahl von Facettenflächen. Die Richtungen von Lichtstrahlen, die von den Lichtquellen in Richtung der Facettenflächen emittierbar sind, sind durch die Facettenflächen veränderbar. Die Lichtquellen sind durch eine Steuereinheit ansteuerbar. Ferner sind die Positionen und/oder Ausrichtungen der Facettenflächen relativ zu den Positionen der Lichtquellen so angeordnet, dass von einer bestimmten, von der Fahrzeugleuchte entfernten Betrachtungsposition aus zumindest ein von einer ersten Lichtquelle emittierter und in seiner Richtung von einer ersten Facettenfläche bei einer ersten Facettenposition veränderter Lichtstrahl sichtbar ist, ein von einer zweiten Lichtquelle emittierter und in seiner Richtung von einer zweiten Facettenfläche bei einer zweiten Facettenposition veränderter Lichtstrahl sichtbar ist und ein von einer dritten Lichtquelle emittierter und in seiner Richtung von einer dritten Facettenfläche bei einer dritten Facettenposition veränderter Lichtstrahl sichtbar ist, wobei die erste, zweite und dritte Facettenposition jeweils beabstandet voneinander angeordnet sind.

Bei der erfindungsgemäßen Fahrzeugleuchte ist somit von einer bestimmten, von der Fahrzeugleuchte entfernten Betrachtungsposition aus zumindest ein von einer ersten Lichtquelle emittierter Lichtstrahl, dessen Richtung von einer ersten Facettenfläche bei einer ersten Facettenposition verändert wurde, sichtbar, ein von einer zweiten Lichtquelle emittierter Lichtstrahl, dessen Richtung von einer zweiten Facettenfläche bei einer zweiten Facettenposition verändert wurde, sichtbar und ein von einer dritten Lichtquelle emittierter Lichtstrahl, dessen Richtung von einer dritten Facettenfläche bei einer dritten Facettenposition verändert wurde, sichtbar. Dabei sind die erste, zweite und dritte Facettenposition jeweils beabstandet voneinander angeordnet.

Die Facettenflächen sind bei der erfindungsgemäßen Fahrzeugleuchte somit insbesondere so angeordnet bzw. ausgerichtet, dass Lichtstrahlen von verschiedenen Lichtquellen über Facettenflächen bei verschiedenen Positionen zu einer bestimmten Betrachtungsposition gelangen können. Diese Geometrie der Facettenflächen relativ zu der Anordnung der Lichtquellen ermöglicht es, Lichtstrahlen von verschiedenen Positionen zu einer bestimmten Betrachtungsposition gelangen zu lassen. Wenn die Lichtquellen nun so angesteuert werden, dass sie nacheinander oder in einer beliebigen Reihenfolge Licht emittieren, ergibt sich vorteilhafterweise ein Funkeleffekt bei der ersten Betrachtungsposition. Ein Betrachter bei dieser Betrachtungsposition nimmt nämlich nacheinander Lichtstrahlen von den verschiedenen Facettenpositionen wahr. Dieser Funkeleffet ergibt sich dabei vorteilhafterweise, ohne dass sich die relative Position des Betrachters zu der Fahrzeugleuchte verändern muss.

Gemäß einer Ausgestaltung der erfindungsgemäßen Fahrzeugleuchte umfasst der Reflektor mehrere beabstandet voneinander angeordnete Facettenflächen für die gilt, dass von einer bestimmten, von der Fahrzeugleuchte entfernten Betrachtungsposition aus ein von der ersten Lichtquelle emittierter und in seiner Richtung von diesen Facettenflächen veränderter Lichtstrahl sichtbar ist. Das bedeutet, dass ein von der ersten Lichtquelle emittierter Lichtstrahl, dessen Richtung von diesen Facettenflächen verändert wurde, sichtbar ist. Gleichermaßen gibt es mehrere beabstandete Facettenflächen für die gilt, dass von dieser Betrachtungsposition aus ein von der zweiten Lichtquelle emittierter und in seiner Richtung von diesen Facettenflächen veränderter Lichtstrahl sichtbar ist. Des Weiteren gibt es mehrere beabstandete Facettenflächen für die gilt, dass von der Betrachtungsposition aus ein von der dritten Lichtquelle emittierter und in seiner Richtung von diesen Facettenflächen veränderter Lichtstrahl sichtbar ist. Wenn somit beispielsweise die erste Lichtquelle Licht emittiert, sind von der Betrachtungsposition aus Lichtstrahlen von mehreren Facettenflächen gleichzeitig sichtbar.

Die Facettenflächen sind jedoch beabstandet voneinander angeordnet. Wenn die zweite Lichtquelle eingeschaltet ist, sind von der Betrachtungsposition aus Lichtstrahlen von mehreren anderen Facettenflächen sichtbar und wenn die dritte Lichtquelle eingeschaltet ist, sind von der Betrachtungsposition aus wiederum mehrere von noch anderen Facettenflächen ausgehende Lichtstrahlen sichtbar. Hierdurch wird vorteilhafterweise der Funkeleffekt noch verstärkt, da ein Betrachter bei dieser Betrachtungsposition Lichtstrahlen gleichzeitig von verschiedenen beabstandeten Facettenpositionen und nacheinander von wiederum anderen beabstandeten Facettenpositionen wahrnimmt.

Gemäß einer anderen Weiterbildung der erfindungsgemäßen Fahrzeugleuchte sind die Positionen und/oder Ausrichtungen der Facettenflächen relativ zu den Positionen der Lichtquellen so angeordnet, dass von der Betrachtungsposition aus ein von der ersten Lichtquelle emittierter und in seiner Richtung von einer zu der ersten Facettenfläche direkt benachbarten Facettenfläche veränderter Lichtstrahl nicht sichtbar ist, ein von der zweiten Lichtquelle emittierter und in seiner Richtung von einer zu der zweiten Facettenfläche direkt benachbarten Facettenfläche veränderter Lichtstrahl nicht sichtbar ist und auch ein von der dritten Lichtquelle emittierter und in seiner Richtung von einer zu der dritten Facettenfläche direkt benachbarten Facettenfläche veränderter Lichtstrahl nicht sichtbar ist. Es ist somit von der Betrachtungsposition aus ein von der ersten Lichtquelle emittierter Lichtstrahl, dessen Richtung von einer zu der ersten Facettenfläche direkt benachbarten Facettenfläche verändert wurde, nicht sichtbar, ein von der zweiten Lichtquelle emittierter Lichtstrahl, dessen Lichtquelle von einer zu der zweiten Facettenfläche direkt benachbarten Facettenfläche verändert wurde, nicht sichtbar und auch ein von der dritten Lichtquelle emittierter Lichtstrahl, dessen Richtung von einer zu der dritten Facettenfläche direkt benachbarten Facettenfläche verändert wurde, nicht sichtbar. Wenn somit eine der

Lichtquellen leuchtet, gelangt zu der Betrachtungsposition ein von der ersten Facettenfläche ausgehender Lichtstrahl zu dieser Betrachtungsposition, jedoch gelangt ein von benachbarten Facettenflächen ausgehender Lichtstrahl nicht zu dieser Betrachtungsposition. Es wird somit gerade keine homogen leuchtende Fläche bei der Betrachtungsposition durch die Lichtemission einer bestimmten Lichtquelle der Fahrzeugleuchte erzeugt. Hierdurch wird vorteilhafterweise der Funkeleffekt verstärkt.

Des Weiteren können die Positionen und/oder Ausrichtungen der Facettenflächen relativ zu den Positionen der Lichtquellen so angeordnet sein, dass von einer bestimmten, von der Fahrzeugleuchte entfernten zweiten Betrachtungsposition aus, die beabstandet von der vorgenannten Betrachtungsposition ist, zumindest ein von der ersten Lichtquelle emittierter und in seiner Richtung von einer vierten Facettenfläche bei einer vierten Facettenposition veränderter Lichtstrahl sichtbar ist, ein von der zweiten Lichtquelle emittierter und in seiner Richtung von einer fünften Facettenfläche bei einer fünften Facettenposition veränderter Lichtstrahl sichtbar ist, und ein von der dritten Lichtquelle emittierter und in seiner Richtung von einer sechsten Facettenfläche bei einer sechsten Facettenposition veränderter Lichtstrahl sichtbar ist, wobei die erste, zweite, dritte, vierte, fünfte und sechste Facettenposition jeweils beabstandet voneinander angeordnet sind. Die Facettenflächen sind somit so angeordnet und ausgerichtet, dass vorteilhafterweise gleichzeitig bei verschiedenen Betrachtungspositionen ein Funkeleffekt erzeugt werden kann, wenn die Lichtquellen in einer bestimmten Sequenz angesteuert werden, um Licht zu emittieren oder verändert zu emittieren. Vorteilhafterweise kann dieser Funkeleffekt für alle Betrachtungspositionen innerhalb eines bestimmten Raumwinkels von der Fahrzeugleuchte erzeugt werden.

Unter Facettenflächen werden im Sinne der vorliegenden Schrift insbesondere benachbarte Flächen des Reflektors verstanden, welche die Richtung einfallender Lichtstrahlen unterschiedlich verändern. Dabei ist die Veränderung beim Übergang von einer Facettenfläche zu einer anderen Facettenfläche, insbesondere zu einer benachbarten Facettenfläche, unstetig. Die Richtung eines Lichtstrahls wird von benachbarten Facettenflächen somit vollkommen unterschiedlich verändert. Auf einer einzigen Facettenfläche kann es auch zu unterschiedlichen Veränderungen der Richtung eines einfallenden Lichtstrahls kommen. Diese Veränderung ist dann jedoch stetig.

Bei der erfindungsgemäßen Fahrzeugleuchte sind die Facettenflächen reflektierend. Die Facettenflächen sind insbesondere spiegelnd, sodass eine gerichtete Reflektion auftritt, bei welcher der Ausfallswinkel eines reflektierten Lichtstrahls gleich dem Einfallswinkel des einfallenden Lichtstrahls ist. Vorteilhafterweise wird hierdurch erreicht, dass ein Lichtstrahl, welcher von einer bestimmten Lichtquelle emittiert wurde, sehr genau zu einer bestimmten Betrachtungsposition umgelenkt wird. Die reflektierende, insbesondere spiegelnde Wirkung der Facettenflächen kann durch eine geeignete Metallbeschichtung (bspw. Aluminium-Bedampfung) erreicht werden.

Die Facettenflächen sind vorzugsweise von ebenen Flächen gebildet. Vorteilhafterweise lassen sich solche Facettenflächen kostengünstig herstellen. Die Normalen benachbarter Facettenflächen sind dabei insbesondere unterschiedlich ausgerichtet. Hierdurch wird auf einfache und kostengünstige Weise die unstetige Veränderung der Richtung der einfallenden Lichtstrahlen und damit der vorstehende Funkeleffekt erreicht.

Die Facettenflächen sind insbesondere über Kanten miteinander verbunden, wobei der Krümmungsradius der Kanten der Facetten möglichst klein ist. Radien auf der Facettenfläche sollten vermieden werden, um die brillante Anmutung des Reflektors zu beeinträchtigen. Gleichermaßen sollte der Radius bei einer Kante, die von benachbarten Facettenflächen gebildet ist, so klein wie möglich sein. Auch durch diese Ausgestaltung wird der Funkeleffekt verstärkt.

Die Facettenflächen sind insbesondere von einer Kombination aus rechteckigen und/oder dreieckigen Flächen gebildet. Es können somit sowohl rechteckige als auch dreieckige Flächen sowie nur rechteckige oder nur dreieckige Flächen umfasst sein, die ggf. unterschiedliche Größen aufweisen. Die Wahl der Geometrie der Facettenflächen richtet sich nach der Geometrie der Reflektorfläche, auf welcher die Facettenflächen gebildet sind. Es sollte hier eine möglichst effiziente Reflektion erzielt werden, wobei Beschränkungen durch das Herstellungsverfahren der Facettenflächen und Beschränkungen, die sich durch die Größe der Facettenflächen ergeben, zu berücksichtigen sind. Diese Gestaltung der Facettenflächen ermöglicht es somit, die Geometrie des Reflektors sehr flexibel zu gestalten und eine effiziente Reflexion zu erzielen.

Die Facettenflächen können auf der Reflektorfläche beispielsweise dadurch gebildet werden, dass sie mittels eines sehr kleinen Fräsers gefräst werden. Beispielsweise kann die Reflektorfläche mit den Facettenflächen aus einem Aluminiumblock herausgefräst werden. Dieser wird insbesondere nicht bedampft, um die Brillanz des Reflektors zu erhalten. Alternativ kann der Reflektor mittels Galvanotechnik hergestellt werden. In diesem Fall ist ein Bedampfen der resultierenden Facettenflächen erforderlich.

Gemäß einer anderen Weiterbildung der Erfindung wird vorgeschlagen, dass die Lichtquellen, deren Lichtstrahlen am Optikelement reflektiert werden, eine erste Ausrichtung und die wenigstens eine weitere Lichtquelle, deren Lichtstrahlen durch das wenigstens eine weitere Bauteil gelangen, eine zweite Ausrichtung aufweisen, wobei die erste Ausrichtung in etwa senkrecht, vorzugsweise senkrecht zur zweiten Ausrichtung ausgerichtet ist. Dabei sind die erste Ausrichtung in etwa senkrecht zu einer Fahrtrichtung und die zweite Ausrichtung in etwa parallel zur Fahrtrichtung ausgerichtet.

Diese Merkmale tragen zu einem kompakten Aufbau der Fahrzeugleuchte bei. Bei einer vorzugsweisen Ausbildung der Lichtquellen als Leuchtdioden wird die Ausrichtung einer Leuchtdiode durch eine Flächennormale auf die Fläche einer Platine definiert, auf die die Leuchtdiode montiert ist.

Es ist dabei gemäß einer weiteren Ausbildung des Erfindungsgedankens sehr vorteilhaft, wenn die Lichtquellen, deren Lichtstrahlen am Optikelement reflektiert werden, oberhalb des Optikelementes angeordnet sind. Hierdurch kann die Sichtbarkeit der Lichtquellen erschwert und das Erscheinungsbild der Fahrzeugleuchte weiter verbessert werden.

Gemäß einer Weiterbildung der erfindungsgemäßen Fahrzeugleuchte umfasst ein Querschnitt des Reflektors eine von der Reflektorfläche gebildete parabolische Linie. Die Reflektorfläche ist in diesem Fall durch ein Verschieben der parabolischen Linie auf einer Geraden gebildet. In einer Richtung ist der Querschnitt des Reflektors somit bei allen Positionen gleich der parabolischen Linie. Unter einer parabolischen Linie wird eine Linie verstanden, die auf einer Parabel liegt. Zwar liegen die reflektierenden Facettenflächen nicht auf der parabolischen Linie. Wenn jedoch über einen Abschnitt des Reflektors eine Mittelung durchgeführt wird, welche den unstetigen Verlauf der benachbarten Facettenflächen glättet, ergibt sich die Reflektorfläche des Reflektors, welche im Querschnitt auf einer parabolischen Linie liegt. Vorteilhaft an dieser rinnenartigen Ausgestaltung der Reflektorfläche ist, dass ein sehr charakteristisches Erscheinungsbild der Fahrzeugleuchte mit einer speziellen Signatur erreicht wird.

Die Lichtquellen, deren Lichtstrahlen am Optikelement reflektiert werden, können bevorzugt in der Brennlinie der Reflektorfläche angeordnet sein. Jeder Querschnitt des Reflektors, bei dem eine von der Reflektorfläche parabolische Linie entsteht, besitzt einen Brennpunkt. Wenn nun benachbarte parallele Querschnitte betrachtet werden, ergibt sich eine Brennlinie der Reflektorfläche. Durch diese Anordnung der Lichtquellen wird vorteilhafterweise erreicht, dass sehr einfach nahezu parallele Lichtstrahlen durch die Facettenflächen erzeugt werden können. Außerdem vereinfacht diese Anordnung der Lichtquellen die Ausrichtung der Facettenflächen relativ zu den Lichtquellen, um eine gewünschte Abstrahlcharakteristik der Fahrzeugleuchte zu erzeugen.

Die Reflektorfläche, auf welcher die Facettenflächen angeordnet sind, kann auch eine andere geometrische Form aufweisen. Sie kann beispielsweise konkav gewölbt sein. In diesem Fall können die Lichtquellen auch auf andere Weise relativ zu der Reflektorfläche angeordnet sein. Sie können beispielsweise auf einer gekrümmten Linie angeordnet sein, beispielsweise auf einer parabolischen oder kreisförmigen Linie. Auch in diesem Fall sind die Positionen und die Ausrichtungen der Facettenflächen relativ zu den Positionen der Lichtquellen so angeordnet, dass die vorstehend genannten Bedingungen erfüllt sind, um einen Funkeleffekt zu erzeugen, wenn die Lichtemissionen der Lichtquellen aufeinanderfolgend verändert werden.

Bei den Lichtquellen handelt es sich insbesondere um lichtemittierende Dioden (Leuchtdioden). Lichtemittierende Dioden haben den Vorteil, dass sie eine sehr lange Lebensdauer aufweisen und außerdem sehr punktförmige Lichtquellen darstellen.

Die erfindungsgemäße Fahrzeugleuchte besitzt für die Lichtquellen, deren Lichtstrahlen am Optikelement reflektiert werden, insbesondere mehr als drei lichtemittierende Dioden. Die Anzahl der lichtemittierenden Dioden bzw. der Lichtquellen liegt insbesondere in einem Bereich von 5 bis 100 Lichtquellen, bevorzugt in einem Bereich von 10 bis 20 Lichtquellen. Hierdurch wird der Funkeleffekt vorteilhafterweise verstärkt. Die Lichtquellen können separat voneinander angeordnet sein. Sie können jedoch auch in einer Gesamtlichtquelle integriert sein, bei der jedoch die Lichtemissionen von verschiedenen, ggf. sehr nah beieinanderliegenden Positionen erfolgen. Bei der Gesamtlichtquelle kann es sich beispielsweise um einen Halbleiterchip mit mehreren lichtemittierenden Dioden handeln.

Die Erfindung kann so weitergebildet werden, dass das wenigstens eine weitere, lichtlenkende Bauteil in einer Öffnung des Reflektors angeordnet ist. Das lichtlenkende Bauteil ist also als separates Bauteil zum Reflektor ausgebildet. Dies hat den Vorteil einer hohen Flexibilität hinsichtlich der Auswahl und Beschaffenheit des separaten Bauteils unabhängig vom Reflektor. Der Reflektor hingegen kann als Gleichteil bei unterschiedlichen Konstruktionsvarianten verwendet werden, was zu einer kostengünstigen Lösung führt.

Es ist aber gemäß einer anderen Ausbildung des Erfindungsgedankens durchaus denkbar, das wenigstens eine weitere, lichtlenkende Bauteil einteilig mit dem Reflektor zu verbinden.

Als einteilige Verbindung soll im Sinne der Erfindung eine stoffschlüssige Verbindung verstanden werden, bei der die Bauteile untrennbar miteinander verbunden sind. Dies kann beispielsweise durch die Herstellung der Teile als ein Teil in einem Spritzgussvorgang erfolgen. Durch die so mögliche Reduzierung der Teileanzahl können Montageschritte bei der Montage der Fahrzeugleuchte eingespart werden mit entsprechendem Einsparungspotenzial. Darüber hinaus können so eventuelle Fugen zwischen den Bauteilen vermieden werden, was dem optischen Eindruck der Fahrzeugleuchte förderlich ist.

Bei einer einteiligen Verbindung kann es vorteilhaft sein, wenn das wenigstens eine weitere, lichtlenkende Bauteil und der Reflektor als 2K-Bauteil ausgebildet sind, also als ein Bauteil, welches aus zwei Komponenten besteht, die untrennbar miteinander verbunden sind. Dies kann durch ein 2K-Spritzgussvorgang realisiert werden. Hierdurch wird es nämlich insbesondere ermöglicht, die Werkstoffe der einzelnen Bauteile, nämlich des Reflektors einerseits und des lichtlenkenden Bauteils andrerseits, optimal auf die jeweiligen Bedürfnisse anzupassen. Beispielsweise kann der Werkstoff des lichtlenkenden Bauteils transparent sein, während der Reflektor aus einem opaken und/oder wärmebeständigen Material sein kann.

Gemäß der Erfindung weist das wenigstens eine weitere, lichtlenkende Bauteil eine Lichtaustrittsseite mit einer Oberfläche auf, welche mit einer Metallschicht versehen ist, die in der Dicke derart bemessen ist, dass Lichtstrahlen der wenigstens einen weiteren Lichtquelle die Metallschicht durchdringen können.

Auf diese Weise ist es möglich, bei einer Betrachtung der Fahrzeugleuchte aus Richtung der Betrachtungsposition im ausgeschalteten Zustand der Fahrzeugleuchte für diese einen hochwertig anmutenden Chromeffekt zu erzielen. Der Reflektor erscheint somit, zusammen mit dem wenigstens einen, lichtlenkenden Bauteil "wie aus einem Guss". Zudem kann die wenigstens eine weitere Lichtquelle in ausgeschaltetem Zustand optimal kaschiert werden. Im eingeschalteten Zustand können jedoch die Lichtstrahlen der wenigstens einen weiteren Lichtquelle die Metallschicht durchdringen und somit zur Realisierung wenigstens einer weiteren Lichtfunktion beitragen.

Gemäß einer Weiterbildung der erfindungsgemäßen Fahrzeugleuchte umfasst diese eine Steuereinheit mit einem Zufallsgenerator. Mit diesem Zufallsgenerator ist bzw. sind aufeinanderfolgend eine oder mehrere Lichtquelle(n) zufällig auswählbar, deren Lichtemission für ein kurzes Zeitintervall veränderbar ist. Die Lichtemission der ausgewählten Lichtquelle(n) kann insbesondere kurzzeitig erhöht werden. Durch den Zufallsgenerator kann vorteilhafterweise erreicht werden, dass das bei der Fahrzeugleuchte wahrnehmbare Funkeln natürlichen Funkelphänomenen angenähert wird.

Gemäß einer anderen Ausgestaltung der erfindungsgemäßen Fahrzeugleuchte umfasst die Steuereinheit einen Speicher, in dem ein Muster gespeichert ist, welches eine aufeinanderfolgende Auswahl von Lichtquellen bestimmt, deren Lichtemission für ein kurzes Zeitintervall veränderbar ist. Auch in diesem Fall wird die Lichtemission der ausgewählten Lichtquelle(n) insbesondere kurzzeitig erhöht. Durch das im Voraus gespeicherte Muster für die Ansteuerung der Lichtquellen kann vorteilhafterweise die Charakteristik des Funkeleffekts im Voraus exakt festgelegt werden.

Durch den Zufallsgenerator oder durch das in dem Speicher gespeicherte Muster sind die Lichtquellen insbesondere so ansteuerbar, dass bei einer Betrachtungsposition ein Funkeleffekt erzeugt wird, bei dem nacheinander eine oder mehrere Facettenflächen bei verschiedenen Positionen aufgrund von reflektierten Lichtstrahlen aufblitzen.

Mit der Erfindung soll auch ein Verfahren zum Bereitstellen einer Lichtfunktion mittels einer erfindungsgemäßen Fahrzeugleuchte bereitgestellt werden. Diese Aufgabe wird mit dem Verfahrensanspruch 12 gelöst. Vorteilhafte Ausgestaltungen des Verfahrens sind einem abhängigen Anspruch zu entnehmen.

Es soll nun das erfindungsgemäße Verfahren zum Bereitstellen einer Lichtfunktion mittels einer erfindungsgemäßen Fahrzeugleuchte beschrieben werden. Dabei weist die Fahrzeugleuchte zumindest drei bei verschiedenen Positionen angeordnete Lichtquellen und ein Optikelement auf, das eine Vielzahl von Facettenflächen umfasst, wobei die Richtungen von Lichtstrahlen, die von den Lichtquellen emittiert wurden und die auf die Facettenflächen treffen, durch die Facettenflächen verändert werden. Bei der Fahrzeugleuchte handelt es sich insbesondere um die vorstehend beschriebene Fahrzeugleuchte.

Bei dem erfindungsgemäßen Verfahren wird eine Sequenz von Lichtquellen ausgewählt, deren Lichtemission aufeinander folgend kurzzeitig verändert wird. Die Lichtemission der Lichtquellen wird sequenziell so verändert, dass von einer bestimmten, von der Fahrzeugleuchte entfernten Betrachtungsposition aus zumindest zunächst ein von einer ersten Lichtquelle emittierter Lichtstrahl, dessen Richtung von einer ersten Facettenfläche bei einer ersten Facettenposition verändert wurde, kurzzeitig sichtbar ist, danach ein von einer zweiten Lichtquelle emittierter Lichtstrahl, dessen Richtung von einer zweiten Facettenfläche bei einer zweiten Facettenposition verändert wurde, kurzzeitig sichtbar ist und anschließend ein von einer dritten Lichtquelle emittierter Lichtstrahl, dessen Richtung von einer dritten Facettenfläche bei einer dritten Facettenposition verändert wurde, kurzzeitig sichtbar ist. Die erste, zweite und dritte Facettenposition sind dabei jeweils beabstandet voneinander angeordnet.

Durch die sequenzielle Ansteuerung der Lichtquellen sowie die Geometrie der Fahrzeugleuchte ergibt sich vorteilhafterweise ein Funkeleffekt, ohne dass sich die relative Position des Betrachters zu der Fahrzeugleuchte verändern muss. Hierdurch wird der Fahrzeugleuchte ein besonders charakteristisches Erscheinungsbild verliehen. Außerdem nimmt der Betrachter eine Lichtfunktion, die von dem erfindungsgemäßen Verfahren bereitgestellt wird, aufgrund des Funkeleffekts besonders leicht und verlässlich wahr.

Ferner wird durch das erfindungsgemäße Verfahren zum Bereitstellen der beschriebenen wenigstens einen Lichtfunktion mit einem wahrnehmbaren Funkeln wenigstens eine weitere Lichtfunktion überlagert. Dies erfolgt dadurch, dass wenigstens eine weitere Lichtquelle angesteuert wird, welche an der der Betrachtungsposition abgewandten Seite des Reflektors angeordnet ist. Dadurch werden Lichtstrahlen emittiert, die durch wenigstens ein weiteres, lichtlenkendes Bauteil gelangen und das lichtlenkende Bauteil auf einer der Betrachtungsposition zugewandten Seite des Reflektors wieder verlassen.

Durch die Überlagerung der wenigstens einen Lichtfunktion mit einem wahrnehmbaren Funkeln durch wenigstens eine weitere Lichtfunkton ergibt sich eine besonders gute Signalwirkung mit einem außerordentlich einprägsamen Erscheinungsbild der Fahrzeugleuchte.

Bei dem Verfahren werden die Lichtquellen insbesondere so angesteuert, dass von der ersten Betrachtungsposition aus ein von der ersten Lichtquelle emittierter Lichtstrahl, dessen Richtung von einer zu der ersten Facettenfläche direkt benachbarten Facettenfläche verändert wurde, nicht sichtbar ist. Auch die Lichtstrahlen von der zweiten bzw. dritten Lichtquelle, deren Richtungen von zu der zweiten bzw. dritten Facettenfläche benachbarten Facettenfläche verändert wurden, sind von der ersten Betrachtungsposition aus nicht sichtbar. Hierdurch wird vorteilhafterweise erreicht, dass für den Betrachter von der ersten Betrachtungsposition aus Lichtimpulse von verschiedenen beabstandeten, d.h. nicht benachbarten, Positionen aus kurzzeitig aufblitzen. Dieser Funkeleffekt wird insbesondere für eine Vielzahl von Betrachtungspositionen innerhalb eines bestimmten Raumwinkels erzeugt.

Bei der Sequenz kann die Lichtemission der ausgewählten Lichtquelle bevorzugt von einem ersten Zustand in einen zweiten Zustand versetzt werden. Bei dem ersten Zustand kann die Lichtquelle z. B. kein Licht emittieren oder Licht mit eine geringeren Intensität emittieren. In dem zweiten Zustand wird die ausgewählte Lichtquelle dann so angesteuert, dass sie Licht mit einer höheren Lichtintensität emittiert. Die geringere Lichtintensität des ersten Zustands kann beispielsweise in einem Bereich von 0 bis 50 % der Lichtintensität des zweiten Zustands sein. Vorteilhafterweise können mittels der beiden Zustände der Lichtemission der Lichtquellen verschiedene Lichtfunktionen der Fahrzeugleuchte realisiert werden, wobei zumindest bei einer Lichtfunktion der vorstehend beschriebene Funkeleffekt auftritt.

Es wird bei der Sequenz zunächst eine echte Teilmenge der Lichtquellen ausgewählt. Die Lichtemission dieser Teilmenge wird dann für ein definiertes Zeitintervall verändert, beispielsweise von dem ersten Zustand in den zweiten Zustand versetzt. Danach wird eine andere Teilmenge der Lichtquellen ausgewählt. Diese Teilmenge unterscheidet sich von der zuvor ausgewählten Teilmenge. Es ist jedoch möglich, dass Lichtquellen in der Schnittmenge der beiden Teilmengen enthalten sind. Alternativ wird ausgeschlossen, dass es eine Schnittmenge gibt. In diesem Fall unterscheiden sich die Teilmengen somit vollständig. Für diese zweite Teilmenge wird dann die Lichtemission für das definierte Zeitintervall verändert. Zwischen den aufeinanderfolgenden Zeitintervallen kann es ein Zwischenzeitintervall geben, in welchem die Lichtemission keiner Lichtquelle verändert wird. Ferner können die beiden Zeitintervalle direkt aufeinanderfolgend sein. Schließlich ist es auch möglich, dass die Zeitintervalle überlappen. Alle diese Ausgestaltungen sind separat von der Erfindung in Verbindung mit den verschiedenartigen Gestaltungen des Optikelements umfasst. Anschließend wird erneut eine dritte Teilmenge der Lichtquellen ausgewählt. Das Verhältnis dieser dritten Teilmenge zu der zweiten Teilmenge kann dasselbe sein, wie das Verhältnis der ersten Teilmenge zu der zweiten Teilmenge. Für das Verhältnis der ersten Teilmenge zu der dritten Teilmenge kann festgelegt sein, dass die dritte Teilmenge nicht identisch mit der ersten Teilmenge sein darf, dass jedoch die Schnittmenge zwischen der dritten Teilmenge und der ersten Teilmenge eine echte Unterteilmenge der ersten und der dritten Teilmenge enthalten darf. Alternativ kann festgelegt sein, wieviel definierte Zeitintervalle zwischen einer erneuten Veränderung der Lichtemission einer bestimmten Lichtquelle liegen müssen. Hierdurch wird dann die Mindestlänge, z.B. des ersten Zustands der Lichtquellen, festgelegt.

Die Auswahl der Lichtquellen wird gemäß einer weiteren Ausgestaltung des Verfahrens vorteilhaft zufällig ausgewählt. Hierfür kann ein Zufallsgenerator verwendet werden. Die zufällige Auswahl der Lichtquellen kann jedoch durch die vorgenannten Nebenbedingungen eingeschränkt werden. Hierdurch wird vorteilhafterweise sichergestellt, dass ein besonders charakteristischer und realitätsnaher Funkeleffekt erzeugt wird.

Gemäß einer anderen Ausgestaltung des Verfahrens ist die Auswahl der Lichtquellen in der Sequenz vorab in einem bestimmten Muster gespeichert. In diesem Fall wird vorteilhafterweise die Charakteristik des Funkeleffekt im Voraus exakt festgelegt.

Die Lichtintensität der ausgewählten Lichtquelle wird insbesondere kurzzeitig erhöht. Dies führt bei dem Funkeleffekt vorteilhafterweise zu einem Aufblitzen von Lichtpulsen.

Mit der Erfindung soll auch ein Kraftfahrzeug unter Schutz gestellt werden, das mit wenigstens einer erfindungsgemäßen Fahrzeugleuchte ausgestattet ist.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: den grundsätzlichen Aufbau eines Ausführungsbeispiels der erfindungsgemäßen Fahrzeugleuchte,
- Fig. 2: perspektivisch ein Beispiel für die Form eines Reflektors des Ausführungsbeispiels der Fahrzeugleuchte gemäß der vorliegenden Erfindung,
- Fig. 3: eine Detailansicht eines Beispiels einer Reflektorfläche, wie sie bei einem Ausführungsbeispiel der vorliegenden Erfindung eingesetzt wird,
- Fig. 4: ein weiteres Detail mit den Facettenflächen des in Figur 3 gezeigten Reflektors,
- Fig. 5: eine Darstellung zur Erläuterung der Position und Ausrichtung der Facettenflächen relativ zu den Positionen der Lichtquellen des Ausführungsbeispiels der erfindungsgemäßen Fahrzeugleuchte,
- Fig. 6: eine Darstellung auf den Reflektor gemäß Ansicht VI aus Fig. 1,
- Fig. 7: eine Schnittdarstellung gemäß Schnittverlauf VII aus Fig. 6,
- Fig. 8: perspektivisch ein weiteres Ausführungsbeispiel der Erfindung,
- Fig. 9: noch ein weiteres Ausführungsbeispiel der Erfindung,
- Fig. 10: eine Darstellung gemäß Detailansicht X aus Fig. 9 und
- Fig. 11: ein Kraftfahrzeug mit erfindungsgemäßen Fahrzeugleuchten.

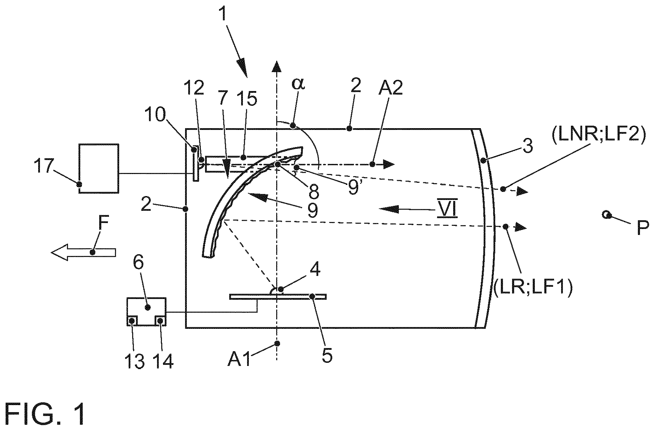

Der grundsätzliche Aufbau der Fahrzeugleuchte 1 wird mit Bezug zu Figur 1 erläutert:
Die Fahrzeugleuchte 1 ist in einem Gehäuse 2 untergebracht, welches in der Lichtemissionsrichtung der Fahrzeugleuchte 1 von einer transparenten Außenlichtscheibe 3 abgeschlossen ist. Die Fahrzeugleuchte 1 umfasst zumindest drei Lichtquellen 4, die auf einer Platine 5 angeordnet sind und mittels einer Steuereinheit 6 ansteuerbar sind bzw. angesteuert werden. Die Lichtquellen 4 sind bei verschiedenen Positionen angeordnet, wie es später im Detail erläutert wird. Bei den Lichtquellen 4 handelt es sich insbesondere um Leuchtdioden. In Lichtemissionsrichtung der Lichtquellen 4 ist ein Reflektor 7, insbesondere ein zusammenhängender Reflektor 7 angeordnet. Dieser Reflektor 7 weist eine Reflektorfläche 8 auf, welche den Lichtquellen 4 zugewandt ist, sodass von den Lichtquellen 4 emittierte Lichtstrahlen auf die Reflektorfläche 8 treffen und als reflektierte Lichtstrahlen LR durch die Außenlichtscheibe 3 nach außen zu einer Betrachtungsposition P gelangen können. Die Lichtstrahlen LR (es ist beispielhaft und schematisch nur ein Lichtstrahl gezeichnet) können eine erste Lichtfunktion LF1, bspw. ein Schlusslicht ausbilden.

Die Reflektorfläche 8 weist zwar eine bestimmte geometrische Form auf. Bei dieser grundsätzlichen Form der Reflektorfläche 8 ist jedoch eine bestimmte Mikrostruktur vorhanden. Die Reflektorfläche 8 umfasst eine Vielzahl von Facettenflächen 9. Die von den Lichtquellen 4 emittierten Lichtstrahlen werden somit an den Facettenflächen 9 der Reflektorfläche 8 reflektiert, sodass die von den Lichtquellen 4 emittierten Lichtstrahlen in ihrer Richtung verändert werden. Die Richtung des an einer Facettenfläche 9 reflektierten Lichtstrahls wird dabei durch die Position und Ausrichtung der Facettenfläche 9 relativ zu der Position der jeweiligen Lichtquelle 4 bestimmt.

Der Reflektor 7 ist aus einem opaken Werkstoff, wobei die Reflektorfläche 8 mit einer Metallschicht, vorzugsweise einer Aluminiumschicht versehen ist. Hierdurch erhalten die Reflektorfläche 8 bzw. die Facettenflächen 9 eine reflektierende, insbesondere eine spiegelnde Wirkung.

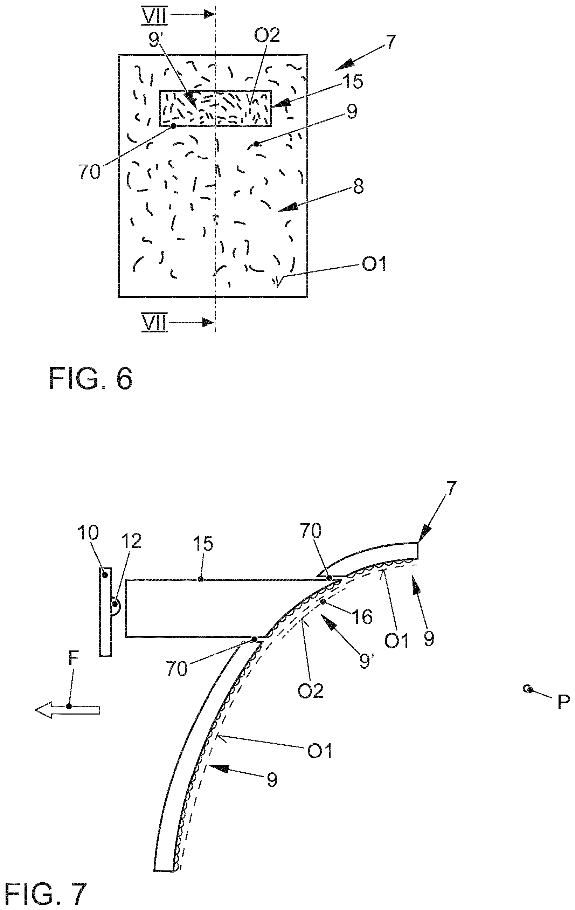

Hinter dem Reflektor 7, also auf einer Seite des Reflektors 7, die der Betrachtungsposition P abgewandt ist, sind eine oder mehrere weitere Lichtquellen 12 auf einer gegebenenfalls gemeinsamen Platine 10 angeordnet. Die Lichtquellen 12 sind durch eine weitere Steuereinheit 17 ansteuerbar. Ferner ist ein weiteres, lichtlenkendes Bauteil 15 zwischen den Lichtquellen 12 und dem Reflektor 7 angeordnet. Das Bauteil 15 ist in einer Öffnung 70 des Reflektors 7 eingelassen und mit diesem verbunden, bspw. verklebt (vgl. Fig. 7).

Von den Lichtquellen 12 emittierbare Lichtstrahlen können somit durch das lichtlenkende Bauteil 15 gelangen. Sie verlassen das lichtlenkende Bauteil 15 auf einer der Betrachtungsposition P zugewandten Seite des Reflektors 7, ohne durch diesen reflektiert zu werden. Sie gelangen somit als nicht durch den Reflektor 7 reflektierte Lichtstrahlen LNR (auch hier ist beispielhaft nur ein Lichtstrahl gezeichnet) zur Betrachtungsposition P. Auf diese Weise kann leicht eine zweite Lichtfunktion LF2, bspw. ein Bremslicht realisiert werden, die der ersten Lichtfunktion LF1 überlagert wird.

Das lichtlenkende Bauteil 15 ist im Ausführungsbeispiel eine Kollimatoroptik, mit der von den Lichtquellen 12 emittierte Lichtstrahlen "eingesammelt" und auf den Reflektor 7 ausgerichtet werden. Das Bauteil 15 ist auf seiner Lichtaustrittsseite mit Facettenflächen 9' versehen, welche ähnlich aussehen wie die Facettenflächen 9. Hierdurch wird der Gesamteindruck der Fahrzeugleuchte 1 trotz Integration des lichtlenkenden Bauteils 15 in die Reflektorfläche 8 nicht gestört.

Ferner ist ersichtlich, dass die Lichtquellen 4 eine Ausrichtung A1 und die Lichtquellen 12 eine Ausrichtung A2 aufweisen. Die Ausrichtungen A1, A2 sind jeweils durch die Flächennormale zur Flächenerstreckung einer Platine 5 bzw. 10 definiert, auf der die Lichtquellen 4 bzw. 12 jeweils montiert sind. Die Ausrichtungen A1 und A2 stehen in einem Winkel α in etwa senkrecht, vorzugsweise senkrecht zueinander. Zudem steht in Montageposition der Fahrzeugleuchte 1 die Ausrichtung A1 in etwa senkrecht zu einer Fahrtrichtung F und die Ausrichtung A2 in etwa parallel zur Fahrtrichtung F.

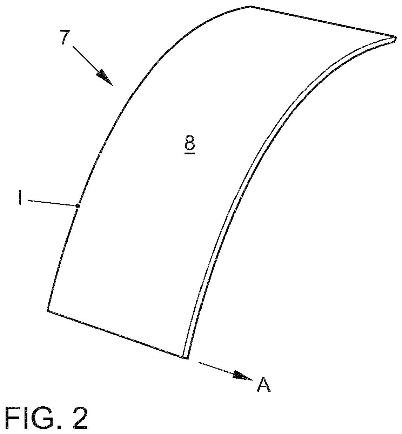

In Figur 2 ist perspektivisch die grundsätzliche Form des Reflektors 7 mit der Reflektorfläche 8 gezeigt. Im Querschnitt liegt die Reflektorfläche 8 des Reflektors 7 auf einer parabolischen Linie I. Die Reflektorfläche 8 ist dann durch ein Verschieben dieser parabolischen Linie I auf einer Geraden gebildet, die in Richtung des Pfeils A verläuft. Bei einem Querschnitt, der senkrecht auf dieser Richtung A steht, ist die Form der Reflektorfläche 8 somit jeweils von einer parabolischen Linie I gebildet. Der Reflektor 7 weist somit die Form einer Rinne auf, die im Querschnitt parabolisch ist. Zu jeder parabolischen Linie I eines Querschnitts gibt es einen Brennpunkt. In Richtung A entsteht somit eine Brennlinie für den Reflektor 7. Die Lichtquellen 4 sind bei dem vorliegenden Ausführungsbeispiel auf dieser Brennlinie angeordnet. Die von den Lichtquellen 4 emittierten Lichtstrahlen erreichen dabei alle Facettenflächen 9 der Reflektorfläche 8. Die Richtung, in welche diese Lichtstrahlen dann reflektiert werden, hängt von der relativen Position und Ausrichtung der Facettenfläche 9 zu der Position der Lichtquelle 4 ab, welche den Lichtstrahl emittiert hat.

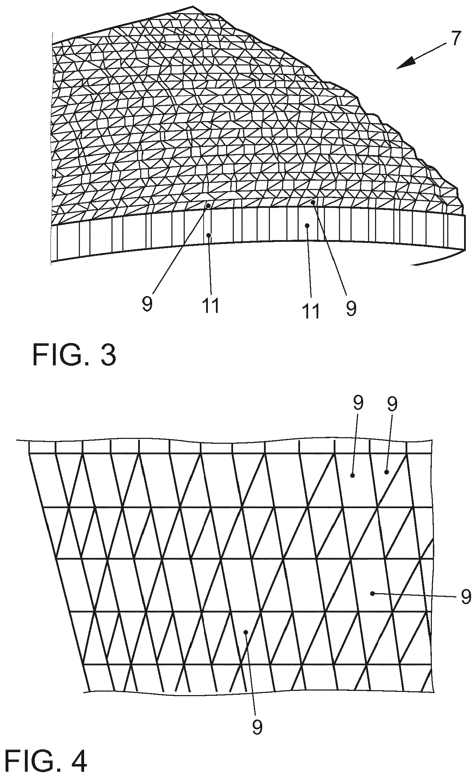

In Figur 3 ist eine Detailansicht des Reflektors 7 gezeigt. Der Reflektor 7 setzt sich dabei aus Segmenten 11 zusammen, welche auf ihrer Oberfläche bei der Reflektorfläche 8 die Facettenflächen 9 bilden.

In Figur 4 sind die Facettenflächen 9 im Detail gezeigt. Sie umfassen viereckige und dreieckige Flächen. Insbesondere wird eine Kombination aus rechteckigen und dreieckigen Flächen gewählt. Die Facettenflächen 9 sind plan, sie weisen keine Krümmung auf, d. h. es handelt sich um ebene Flächen. Zwischen benachbarten Facettenflächen 9 sind Kanten gebildet, die einen möglichst kleinen Radius aufweisen. Die Ausrichtung der Normalen auf einer Facettenfläche 9 unterscheidet sich zu der Ausrichtung der Normalen aller benachbarten Facettenflächen 9. Durch die Facettenflächen 9 wird die Reflektorfläche 8, mit Ausnahme einer Oberfläche O2 des lichtleitenden Bauteils 15 (vgl. Fig. 6) vollständig ausgefüllt.

Die Facettenflächen 9 sind außerdem spiegelnd, d.h. der Einfallswinkel eines einfallenden Lichtstrahls ist gleich dem Ausfallswinkel des reflektierten Lichtstrahls. Parallele Lichtstrahlen, die auf die Facettenfläche 9 treffen, werden bei einer bestimmten Facettenfläche 9 entsprechend dem Reflexionsgesetz reflektiert. Da die Normale jeder benachbarten Facettenfläche anders ausgerichtet ist, ist die Veränderung der Richtung der reflektierten Lichtstrahlen bei einem Übergang von einer Facettenfläche 9 zu einer anderen Facettenfläche 9 unstetig.

Insgesamt sind die Facettenflächen 9 auf der Reflektorfläche 8 so positioniert und ausgerichtet, dass eine erste Lichtfunktion eines Fahrzeugs bereitgestellt werden kann, wenn alle Lichtquellen 4 oder eine Teilmenge davon mit einer definierten Intensität Licht emittieren. Es wird die definierte Abstrahlcharakteristik dieser Lichtfunktion durch die Reflektion der Lichtstrahlen an den Facettenflächen 9 der Reflektorfläche 8 bereitgestellt. Des Weiteren können die Facettenflächen 9 so positioniert und ausgerichtet sein, dass eine weitere Lichtfunktion eines Fahrzeugs bereitgestellt wird, wenn die Lichtemission eines Teils der Lichtquellen 4 verändert wird im Vergleich zu der Lichtemission für die Bereitstellung der ersten Lichtfunktion. Die Veränderung der Lichtemission ist dabei insbesondere zeitlich veränderlich. Des Weiteren wird die Lichtemission so verändert, dass zumindest ein Teil der Lichtquellen 4 zumindest zeitweise eine andere Lichtintensität emittiert.

Auf diese Weise kann durch eine geeignete Steuerung der Lichtquellen 4 mittels der Steuereinheit 6 jede Lichtfunktion eines Scheinwerfers eines Fahrzeugs oder einer Heckleuchte eines Fahrzeugs bereitgestellt werden. Die erfindungsgemäße Fahrzeugleuchte wird insbesondere als Heckleuchte eingesetzt. Es können somit die Schlusslichtfunktion, die Bremslichtfunktion, die Funktion einer Nebelschlussleuchte und/oder die Funktion eines Fahrtrichtungsanzeigers bereitgestellt werden. Alternativ oder zusätzlich können auch noch weitere Signalfunktionen bereitgestellt werden.

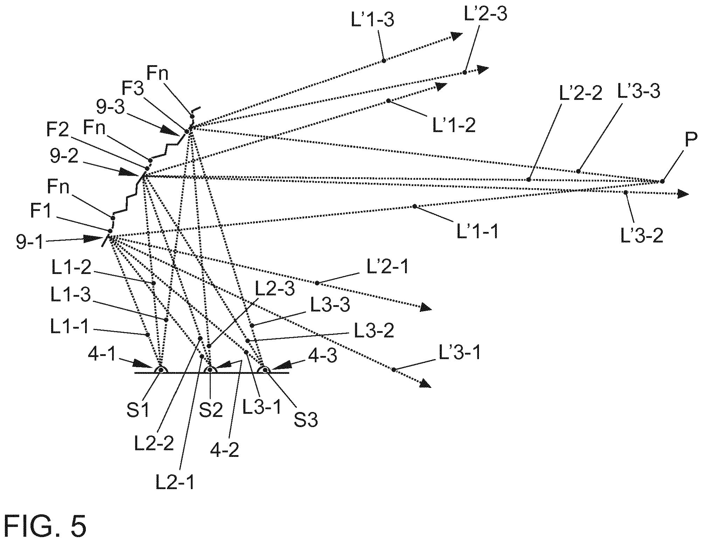

Mit Bezug zur Figur 5 wird die Geometrie der Facettenfläche 9 relativ zu den Positionen der Lichtquellen 4 im Detail erläutert:
Es werden dabei drei Lichtquellen 4-1, 4-2 und 4-3 betrachtet. Es wird darauf hingewiesen, dass die Fahrzeugleuchte 1 eine beliebige andere Anzahl an weiteren Lichtquellen 4 umfassen kann, die bei jeweils verschiedenen Positionen angeordnet sind. Die Lichtquelle 4-1 ist bei der Position S1, die Lichtquelle 4-2 bei der Position S2 und die Lichtquelle 4-3 bei der Position S3 angeordnet. Auf dem Reflektor 7 sind bei der Reflektorfläche 8 unter anderem die Facetten 9-1, 9-2 und 9-3 bei den Positionen F1, F2 und F3 angeordnet. Die Positionen F1, F2 und F3 sind beabstandet voneinander, sodass zwischen diesen Positionen weitere Facettenflächen 9 bei den allgemein mit Fn bezeichneten Positionen angeordnet sind.

Es werden nun die Lichtstrahlen untersucht, welche auf eine bestimmte Betrachtungsposition P in Lichtemissionsrichtung der Fahrzeugleuchte 1 treffen. Es wird somit untersucht, wie ein Betrachter bei der Betrachtungsposition P die Fahrzeugleuchte 1 wahrnimmt.

Die Lichtquelle 4-1 bei der Position S1 emittiert die Lichtstrahlen L1-1, L1-2 und L1-3. Der Lichtstrahl L1-1 trifft auf die Facettenfläche 9-1 bei der Position F1, der Lichtstrahl L1-2 trifft auf die Facettenfläche 9-2 bei der Position F2 und der Lichtstrahl L1-3 trifft auf die Facettenfläche 9-3 bei der Position F3. Die Facettenfläche 9-1 ist nun so ausgerichtet, dass der Lichtstrahl L1-1 so reflektiert wird, dass der reflektierte Lichtstrahl L'1-1 zur Betrachtungsposition P gelangt, sodass dieser Lichtstrahl von einem Betrachter bei der Betrachtungsposition P sichtbar ist. Eine Veränderung der Lichtintensität der Lichtquelle 4-1 nimmt somit ein Betrachter bei der Betrachtungsposition P als Veränderung der Lichtemission bei der Facettenfläche 9-1 bei der Position F1 wahr.

Die Facettenfläche 9-2 bei der Position F2 ist nun so ausgerichtet, dass der Lichtstrahl L1-2 so reflektiert wird, dass der reflektierte Lichtstrahl L'1-2 nicht auf die Betrachtungsposition P trifft. Er ist somit aus der Betrachtungsposition P auch nicht sichtbar. Gleichermaßen ist auch die Facettenfläche 9-3 bei der Position F3 so ausgerichtet, dass der Lichtstrahl L1-3 so reflektiert wird, dass der reflektierte Lichtstrahl L'1-3 nicht auf die Betrachtungsposition P trifft.

Die zweite Lichtquelle 4-2 emittiert unter anderem den Lichtstrahl L2-1 in Richtung der Position F1 der Facettenfläche 9-1, den Lichtstrahl L2-2 in Richtung der Position F2 der Facettenfläche 9-2 und den Lichtstrahl L2-3 in Richtung der Position F3 der Facettenfläche 9-3. Der Lichtstrahle L2-1 wird dabei an der Facettenfläche 9-1 so reflektiert, dass der reflektierte Lichtstrahl L'2-1 nicht zu der Betrachtungsposition P gelangt. Gleichermaßen wird der Lichtstrahl L2-3 an der Facettenfläche 9-3 so reflektiert, dass der reflektierte Lichtstrahl L'2-3 nicht zu der Betrachtungsposition P gelangt. Die Facettenfläche 9-2 bei der Position F2 ist hingegen so ausgerichtet, dass der Lichtstrahl L2-2 so reflektiert wird, dass der reflektierte Lichtstrahl L'2-2 auf die Betrachtungsposition P trifft, sodass eine Veränderung der Lichtemission der zweiten Lichtquelle 4-2 von einem Betrachter bei der Betrachtungsposition P bei der Position F3 wahrnehmbar ist.

Die dritte Lichtquelle 4-3 emittiert unter anderem die Lichtstrahlen L3-1, L3-2 und L3-3. Dabei wird der Lichtstrahl L3-1 von der Facettenfläche 9-1 so reflektiert, dass der reflektierte Lichtstrahl L'3-1 nicht auf die Betrachtungsposition P trifft. Gleichermaßen wird der Lichtstrahl L3-2 so von der Facettenfläche 9-2 so reflektiert, dass der reflektierte Lichtstrahl L'3-2 nicht auf die Betrachtungsposition P trifft. Die Facettenfläche 9-3 ist hingegen so ausgerichtet, dass der Lichtstrahl L3-3 so reflektiert wird, dass der reflektierte Lichtstrahl L'3-3 auf die Betrachtungsposition P trifft.

Des Weiteren sind zu den Facettenflächen 9-1, 9-2 und 9-3 benachbarte Facettenflächen bei den Positionen Fn so ausgerichtet, dass die von den Lichtquellen 4-1, 4-2 und 4-3 emittierten Lichtstrahlen so reflektiert werden, dass sie nicht auf die Betrachtungsposition P treffen.

Es wird darauf hingewiesen, dass die Betrachtungsposition P beliebig innerhalb eines Raumwinkels von der Lichtquelle 1 gewählt werden kann, sodass die vorstehend bestehenden Reflektionen an den Facettenflächen 9 entsprechend auch für andere Betrachtungspositionen gelten.

Werden alle Facettenflächen 9 der Reflektorfläche 8 betrachtet, so gibt es bei einem Ausführungsbeispiel mehrere, jedoch beabstandete und nicht benachbarte Facettenflächen 9, welche die von der ersten Lichtquelle 4-1 emittierten Lichtstrahlen in Richtung der Betrachtungsposition P reflektieren. Gleichermaßen gibt es mehrere beabstandete und nicht benachbarte Facettenflächen 9, die von der zweiten Lichtquelle 4-2 emittierte Lichtstrahlen zu der Betrachtungsposition P reflektieren und auch für die dritte Lichtquelle 4-3 gibt es mehrere beabstandete, jedoch nicht benachbarte Facettenflächen 9, die Lichtstrahlen dieser Lichtquelle 4-3 in Richtung der Betrachtungsposition P reflektieren. Zur Vereinfachung werden im Folgenden die Facettenflächen 9, welche Lichtstrahlen von einer bestimmten Lichtquelle 4 zu der Betrachtungsposition P reflektieren, als eine Teilmenge der Facettenflächen 9 bezeichnet, die dieser Lichtquelle 4 zugeordnet sind.

Bei weiteren Ausführungsbeispielen umfasst die Fahrzeugleuchte 1 eine größere Anzahl an Lichtquellen 4. In diesem Fall kann zu jeder weiteren Lichtquelle 4 eine weitere Teilmenge von Facettenflächen 9 gebildet sein, die entsprechende Lichtstrahlen von dieser weiteren Lichtquelle 4 zu der Betrachtungsposition P reflektieren. Die Anzahl der Teilmengen der Facettenflächen 9 entspricht somit normalerweise der Anzahl der Lichtquellen 4.

Im Folgenden wird ein Ausführungsbeispiel des erfindungsgemäßen Verfahrens erläutert, welches mittels der vorstehend beschriebenen Fahrzeugleuchte ausgeführt wird: Bei dem im Folgenden beschriebenen Verfahren wird mittels der Fahrzeugleuchte 1 die Bremslichtfunktion bereitgestellt. Es wird jedoch darauf hingewiesen, dass das Verfahren entsprechend angewendet werden kann, um eine andere Lichtfunktion bereitzustellen oder eine Kombination von Lichtfunktionen zu realisieren.

In der Steuereinheit 6 ist ein Speicher 13 vorgesehen, in dem ein Muster gespeichert ist, welches eine aufeinanderfolgende Auswahl von Lichtquellen 4 bestimmt, deren Lichtemission für ein kurzes Zeitintervall verändert wird. Ferner ist in dem Speicher 13 die Länge dieses Zeitintervalls gespeichert. Des Weiteren kann ggf. die Länge eines Zwischenzeitintervalls gespeichert sein, welches zwischen zwei benachbarten Zeitintervallen liegt, bei denen die Lichtemission von verschiedenen Lichtquellen verändert wird.

Es wird im Folgenden beispielhaft angenommen, dass insgesamt sechzehn Lichtquellen 4 in der Fahrzeugleuchte 1 vorgesehen sind. Das Muster wählt nun eine erste Teilmenge dieser Lichtquellen 4 für ein erstes Zeitintervall aus. Für dieses Zeitintervall werden diese Lichtquellen 4 der ersten Teilmenge von einem ersten Zustand in einen zweiten Zustand versetzt. Der Einfachheit halber wird im Folgenden davon ausgegangen, dass im ersten Zustand die Lichtquellen 4 ausgeschaltet sind und im zweiten Zustand die Lichtquellen 4 eingeschaltet sind.

Für ein kurzes Zeitintervall von beispielsweise 100 ms werden die Lichtquellen 4 der ersten Teilmenge nun mittels der Steuereinheit 6 in den zweiten Zustand versetzt, d.h. eingeschaltet. Für dieses Zeitintervall sieht ein Betrachter bei der Betrachtungsposition P nun Lichtimpulse bei den Positionen der Facettenflächen 9, die den Lichtquellen 4 dieser Teilmenge so zugeordnet sind, d. h. die den Lichtquellen 4 zugeordneten Teilmengen der Facettenflächen 9. Von diesen Facettenflächen 9 werden Lichtstrahlen von den Lichtquellen 4 der ersten Teilmenge zu der Betrachtungsposition P reflektiert. Nach Ablauf des ersten Zeitintervalls werden die Lichtquellen 4 dieser ersten Teilmenge wieder in den ersten Zustand versetzt, d.h. ausgeschaltet.

Für das sich anschließende zweite Zeitintervall bestimmt das in dem Speicher 13 gespeicherte Muster der Steuereinheit 6, dass eine andere, zweite Teilmenge der Lichtquellen 4, die sich vollständig von der vorherigen Teilmenge unterscheidet, eingeschaltet wird. Für das zweite Zeitintervall sieht ein Betrachter bei der Betrachtungsposition P somit Lichtstrahlen der Teilmengen der Facettenflächen 9, die den Lichtquellen 4 zugeordnet sind, d. h. die das Licht dieser Lichtquellen 4 zu der Betrachtungsposition P reflektieren. Wie vorstehend beschrieben, sind diese Facettenflächen 9 beabstandet und nicht benachbart zu den Facettenflächen 9, von welchen ein Betrachter bei der Betrachtungsposition P beim ersten Zeitintervall Lichtstrahlen gesehen hat.

Bei sich anschließenden Zeitintervallen werden wiederum weitere Teilmengen der Lichtquellen 4 mittels des in dem Speicher 13 gespeicherten Musters ausgewählt, sodass bei diesem Zeitintervall der Betrachter bei der Betrachtungsposition P jeweils sich verändernde Lichtimpulse von aufeinanderfolgend anderen Facettenflächen 9 wahrnimmt. Mittels des Musters wird somit eine Sequenz von Lichtquellen ausgewählt, deren Lichtemission aufeinander folgend kurzzeitig verändert, insbesondere erhöht wird. Insgesamt nimmt ein Betrachter von beliebigen Betrachtungspositionen P ein Funkeln der Lichtemission der Fahrzeugleuchte 1 wahr, und zwar ohne dass sich die relative Position der Fahrzeugleuchte 1 zu der Betrachtungsposition P ändern muss. Wenn sich allerdings die relative Position der Fahrzeugleuchte 1 zu der Betrachtungsposition verändert, wird auch ein Funkeln wahrgenommen, da dieser Funkeleffekt für beliebige Betrachtungspositionen P erzeugt wird. Dieser Funkeleffekt unterscheidet sich jedoch von einem einleitend erwähnten Glitzereffekt, der nur auftritt, wenn sich die Betrachtungsposition relativ zu der Fahrzeugleuchte 1 verändert.

Wesentlich ist, dass gemäß dem erfindungsgemäßen Verfahren nun durch geeignete Ansteuerung der Lichtquellen 12 über die Steuereinheit 17 zusätzlich zu der wenigstens einen über die Lichtquellen 4 realisierbaren, funkelnden Lichtfunktion LF1 wenigstens eine weitere Lichtfunktion LF2 erzeugt und der Lichtfunktion LF1 überlagert wird. Die von den Lichtquellen 12 emittierten Lichtstrahlen werden dazu durch das lichtlenkende Bauteil 15 gelenkt und verlassen dieses an der der Betrachtungsposition P zugewandten Seite des Reflektors 7 in Richtung der Betrachtungsposition P.

Bei einem weiteren Ausführungsbeispiel ist alternativ oder zusätzlich ein Zufallsgenerator 14 in die Steuereinheit 6 integriert. In diesem Fall wird die Sequenz von Lichtquellen 4 zufällig ausgewählt, wobei die Steuereinheit 6 die vorstehend genannten Nebenbedingungen berücksichtigt. Bei aufeinanderfolgenden Zeitintervallen werden somit nicht dieselben Lichtquellen 4 ausgewählt. Die ausgewählten Teilmengen für aufeinanderfolgende Zeitintervalle unterscheiden sich somit insbesondere vollständig.

Es wird darauf hingewiesen, dass die vorstehend beschriebene Steuerung der Lichtquellen 4 mittels der Steuereinheit 6 für verschiedene Beispiele von Formen und Ausrichtungen der Reflektorfläche 8 und der Facettenflächen 9 verwendet werden kann. Gleichermaßen bilden verschiedene Gestaltungen und Geometrien der Reflektorfläche 8 und der zugehörigen Facettenflächen 9 in Verbindung mit den verschiedenen beschriebenen Steuerungen der Lichtquellen 4 weitere Ausführungsbeispiele, die unabhängig voneinander von der Erfindung umfasst sind. Dabei wird jedoch bei allen zu der Erfindung gehörigen Ausführungsbeispielen der vorstehend beschriebene Funkeleffekt bei verschiedenen Betrachtungspositionen P erzeugt.

Bei einem weiteren Ausführungsbeispiel des erfindungsgemäßen Verfahrens wird mittels der Fahrzeugleuchte 1 die Schlusslichtfunktion und die Bremslichtfunktion bereitgestellt. In diesem Fall steuert die Steuereinheit 6 die Lichtquellen 4 zum Bereitstellen der Schlusslichtfunktion so an, dass Lichtstrahlen einer ersten, geringeren Lichtintensität emittiert werden. Zum Bereitstellen der Bremslichtfunktion wird, wie vorstehend beschrieben, eine Sequenz von Lichtquellen 4 ausgewählt, deren Lichtemission aufeinander folgend kurzzeitig erhöht wird. Die Bremslichtfunktion zeichnet sich somit durch eine erhöhte Lichtemission und einen Funkeleffekt aus. Die emittierte Lichtintensität einer Lichtquelle 4 kann für die Schlusslichtfunktion z. B. 10% der emittierten Lichtintensität für die Bremslichtfunktion sein.

Bei einem noch weiteren Ausführungsbeispiel des erfindungsgemäßen Verfahrens wird mittels der Fahrzeugleuchte 1 die Schlusslichtfunktion und die Funktion des Fahrtrichtungsanzeigers bereitgestellt. Wie im vorstehenden Ausführungsbeispiel steuert die Steuereinheit 6 die Lichtquellen 4 zum Bereitstellen der Schlusslichtfunktion so an, dass Lichtstrahlen einer ersten, geringeren Lichtintensität emittiert werden. Zum Bereitstellen eines Fahrtrichtungsanzeigers wird nun eine Sequenz von neben einander angeordneten Lichtquellen 4 ausgewählt, deren Lichtemission aufeinanderfolgend kurzzeitig erhöht wird. Die Sequenz wird dabei so gewählt, dass nacheinander im Wesentlichen auf einer Linie angeordnete Lichtquellen 4 der Reihe nach ausgewählt werden, sodass ein funkelndes Lauflicht erzeugt wird, bei dem neben dem Funkeleffekt eine Steigerung der Lichtintensität entlang einer Richtung läuft. Das spezielle Muster für die Sequenz zur Auswahl der Lichtquellen 4 für die Funktion des Fahrtrichtungsanzeigers ist in dem Speicher 13 gespeichert.

Es wird nun auf weitere Ausführungsformen des Reflektors der erfindungsgemäßen Fahrzeugleuchte eingegangen:
Aus der Fig. 6 ist eine Ansicht auf die Reflektorfläche 8 (vgl. Ansicht VI aus Fig. 1) ersichtlich. Hierbei ist schematisch angedeutet, dass eine von der Betrachtungsposition P sichtbare Oberfläche O2 des Bauteils 15 weitgehend der optischen Anmutung einer sichtbaren Oberfläche O1 der Reflektorfläche 8 entspricht. Dies wird dadurch erreicht, dass die Oberfläche O2 auch durch Facettenflächen 9' gebildet wird. Diese sind jedoch nicht dazu geeignet und bestimmt, den beschriebenen Funkeleffekt zu erzeugen. Die Ausrichtung und Positionierung der Facettenflächen 9' ist vielmehr derart berechnet, dass die gewünschte Lichtverteilung einer weiteren Lichtfunktion realisiert wird, welche durch die das Bauteil 15 verlassende Lichtstrahlen erzeugt werden soll.

Anhand der Fig. 7 ist zu erkennen, dass das Bauteil 15 derart in der Öffnung 70 positioniert und mit dem Reflektor 7 verbunden ist, dass die resultierenden Oberflächen O1 und O2 (durch gestrichelte Linien dargestellt) in etwa bündig zueinander stehen. Zwischen dem Bauteil 15 und dem Reflektor 7 ist ein nicht bezifferter Spalt ausgebildet, welcher mit einer hier nicht dargestellten Klebemasse ausgefüllt ist.

Zusätzlich kann die Oberfläche O2 mit einer dünnen Metallschicht 16 überzogen sein (vgl. Strichpunktlinie). Die Metallschicht 16 ist in der Dicke derart bemessen, dass Lichtstrahlen der Lichtquellen 12 die Metallschicht 16 durchdringen können. Umgekehrt können Lichtstrahlen der Umgebung nicht von außen, also bspw. von der Betrachtungsposition P durch die Metallschicht 16 hindurchdringen. So entsteht auch für die Oberfläche O2 eine verchromte Anmutung, die der Anmutung der Oberfläche O1 gleich ist.

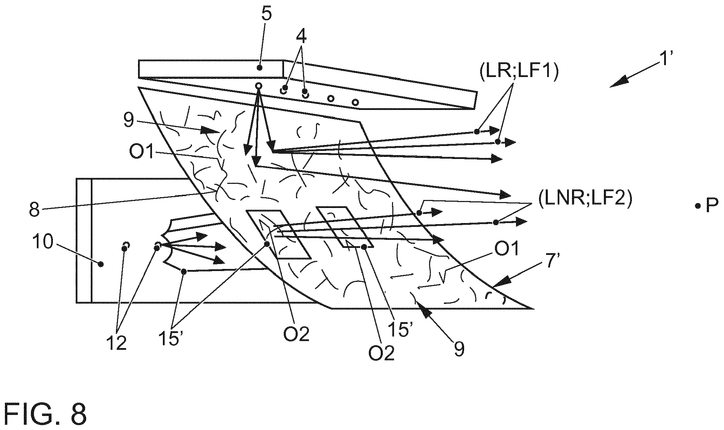

In Fig. 8 ist ein weiteres Ausführungsbeispiel für eine erfindungsgemäße Fahrzeugleuchte (1') beschrieben. Es sind nur die für das Verständnis der Erfindung wesentlichen Bauteile dargestellt. Im Unterschied zu dem vorhergehenden Ausführungsbeispiel sind hierbei die Lichtquellen 4 oberhalb eines Reflektors 7' angeordnet. Zudem sind zwei lichtlenkende Bauteile 15' in einem unteren Bereich des Reflektors 7' in diesen bis zu seiner Reflektorfläche 8 eingelassen. Die Bauteile 15' sind den Lichtquellen 12 zugeordnet. Sie sind derart ausgebildet, dass sie das emittierte Licht der Lichtquellen 12 einsammeln und auf den Reflektor 7' ausrichten.

Mit P ist wiederum eine Betrachtungsposition eines Betrachters beziffert. Aus der Betrachtungsposition P können einerseits durch den Reflektor 7' reflektierte Lichtstrahlen LR der Lichtquellen 4, also eine erste Lichtfunktion LF1 mit dem beschriebenen Funkeleffekt wahrgenommen werden, andrerseits werden die aus den lichtlenkenden Bauteilen 15' austretenden, jedoch nicht durch den Reflektor 7' reflektierten Lichtstrahlen LNR der Lichtquellen 12 als überlagerte Lichtfunktion LF2 wahrgenommen.

Die durch die Facettenflächen 9 bedingte Anmutung der Oberfläche O1 vom Reflektor 7' wird durch eine vergleichbare Anmutung der Oberflächen O2 von den lichtlenkenden Bauteilen 15' auf deren Lichtaustrittsseite nachempfunden. Durch die Oberflächen O2 ist jedoch kein Funkeleffekt erzeugbar. Er ist an diesen Stellen auch nicht gewünscht.

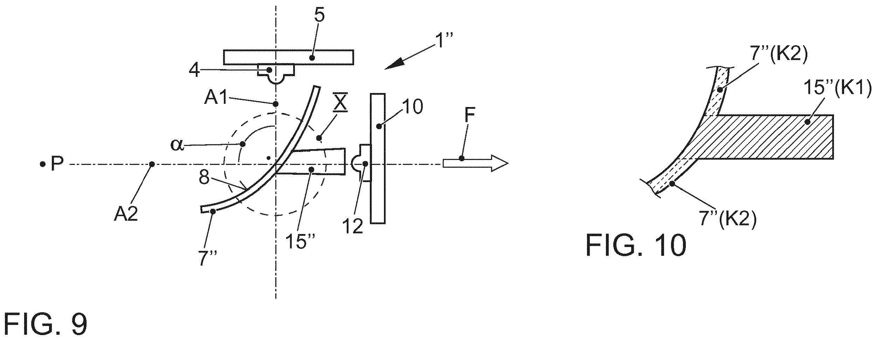

In den Fig. 9 und 10 ist noch ein weiteres Ausführungsbeispiel für eine erfindungsgemäße Fahrzeugleuchte (1") dargestellt, wobei auch hier der Einfachheit halber ein Leuchtengehäuse und eine Außenlichtscheibe nicht gezeichnet sind.

Im Unterschied zum vorhergehenden Ausführungsbeispiel ist hierbei ein lichtlenkendes Bauteil 15" einteilig mit einem Reflektor 7" verbunden. Konkret sind der Reflektor 7" und das Bauteil 15" in einem 2K(Zweikomponenten)-Spritzgussverfahren hergestellt. Während das Bauteil 15" aus einer ersten, transparenten Komponente K1 besteht, ist der Reflektor 7" aus einer zweiten, opaken Komponente K2 beschaffen. Das lichtlenkende Bauteil 15" ist wiederum derart ausgebildet, dass es das emittierte Licht der Lichtquellen 12 einsammelt und auf den Reflektor 7" ausrichtet.

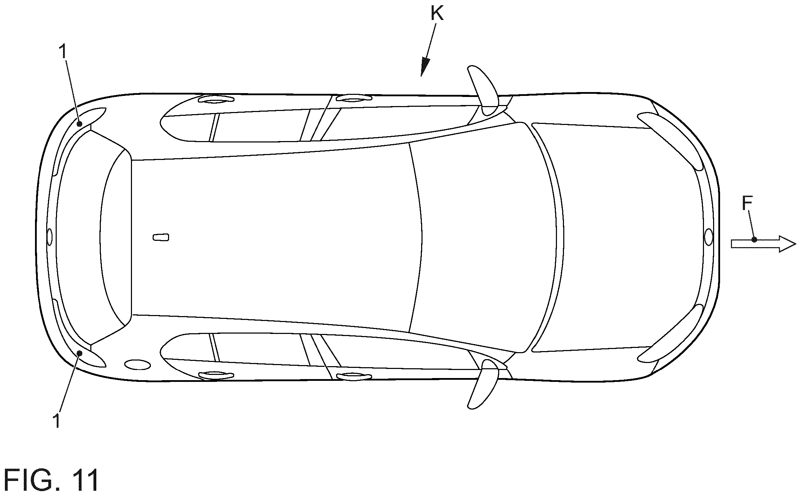

Schließlich zeigt die Fig. 11 ein Kraftfahrzeug K, welches mit zwei erfindungsgemäßen Fahrzeugleuchten 1 ausgestattet ist. Die Fahrzeugleuchten 1 sind im Ausführungsbeispiel als Heckleuchten ausgebildet. Sie können aber alternativ oder zusätzlich auch als Scheinwerfer des Kraftfahrzeugs K ausgebildet sein.

Es wird nochmal darauf hingewiesen, dass die in den Ausführungsbeispielen dargestellten Reflektoren 7, 7' und 7" alle vergleichbar aufgebaut und vergleichbar zu den diesen Reflektoren zugeordneten Lichtquellen 4 positioniert und ausgerichtet sind, so, wie dies insbesondere anhand der Figuren 1 bis 5 für den Reflektor 7 und die Lichtquellen 4 ausführlich beschrieben ist.

### Bezugszeichenliste

- 1,1', 1": Fahrzeugleuchte
- 2: Gehäuse
- 3: Außenlichtscheibe
- 4, 4-1, 4-2, 4-3: Lichtquellen
- 5: Platine
- 6: Steuereinheit
- 7, 7', 7": Reflektor
- 8: Reflektorfläche
- 9, 9-1, 9-2, 9-3: Facettenflächen mit Funkeleffekt
- 9': Facettenflächen ohne Funkeleffekt
- 10: Platine
- 11: Segmente
- 12: Lichtquellen
- 13: Speicher
- 14: Zufallsgenerator
- 15, 15', 15": lichtlenkendes Bauteil
- 16: Metallschicht
- 17: Steuereinheit
- 18: Interferenzbeschichtung
- 70: Öffnung

- A: Richtung
- B: Bereich ohne Facettenflächen
- F: Fahrtrichtung
- K: Kraftfahrzeug
- O1: Oberfläche des Reflektors
- O2: Oberfläche des lichtlenkenden Bauteils
- P: Betrachtungsposition
- I: parabolische Linie
- S1, S2, S3: Positionen der Lichtquellen
- F1, F2, F3, Fn: Positionen der Facettenflächen
- L1-1, L1-2, L1-3, L2-1,:
- L2-2, L2-3, L3-1, L3-2, L3-3: Lichtstrahlen
- L'1-1, L'1-2, L'1-3, L'2-1,:
- L'2-2, L'2-3, L'3-1, L'3-2, L'3-3: reflektierte Lichtstrahlen
- LF1: Lichtfunktion
- LF2: Lichtfunktion
- LR: reflektierte Lichtstrahlen
- LNR: nicht durch den Reflektor reflektierte Lichtstrahlen
- α: Winkel

## Patentansprüche

1. Fahrzeugleuchte (1, 1', 1") mit wenigstens einem Reflektor (7, 7', 7"), dem wenigstens eine erste Lichtquelle (4; 4-1, 4-2, 4-3) zugeordnet ist, wobei die Richtung von emittierten Lichtstrahlen der wenigstens einen ersten Lichtquelle (4, 4-1, 4-2, 4-3) durch den Reflektor (7, 7', 7") derart in Richtung einer bestimmten, von der Fahrzeugleuchte (1,1',1") entfernten Betrachtungsposition (P) umlenkbar ist, dass dort wenigstens eine erste Lichtfunktion (LF1) wahrnehmbar ist und mit wenigstens einer weiteren Lichtquelle (12), von der Lichtstrahlen emittierbar sind, durch die in der Betrachtungsposition (P) wenigstens eine zweite Lichtfunktion (LF2) wahrnehmbar ist, wobei die wenigstens eine weitere Lichtquelle (12) auf einer der Betrachtungsposition (P) abgewandten Seite des Reflektors (7, 7', 7") vorhanden ist und zwischen der wenigstens einen weiteren Lichtquelle (12) und dem Reflektor (7, 7', 7") wenigstens ein weiteres, lichtlenkendes Bauteil (15,15',15") angeordnet ist, welches mit dem Reflektor (7, 7', 7") verbunden ist, derart, dass von der wenigstens einen weiteren Lichtquelle (12) emittierte Lichtstrahlen durch das wenigstens eine weitere, lichtlenkende Bauteil (15,15',15") gelangen und das lichtlenkende Bauteil (15,15',15") zur Realisierung wenigstens der einen zweiten Lichtfunktion (LF2) auf einer der Betrachtungsposition (P) zugewandten Seite des Reflektors (7, 7', 7") wieder verlassen können, **dadurch gekennzeichnet, dass** das wenigstens eine weitere, lichtlenkende Bauteil (15, 15', 15") eine Lichtaustrittsseite mit einer solchen Oberfläche (O2) aufweist, die für einen Betrachter beim optischen Gesamteindruck der Fahrzeugleuchte der optischen Anmutung einer Oberfläche (O1) des Reflektors (7,7',7") gleich oder zumindest ähnlich ist und welche mit einer Metallschicht (16) versehen ist, die in der Dicke derart bemessen ist, dass Lichtstrahlen der wenigstens einen weiteren Lichtquelle (12) die Metallschicht (16) durchdringen können.

2. Fahrzeugleuchte (1, 1',1") nach Anspruch 1, **dadurch gekennzeichnet, dass** diese zumindest drei bei verschiedenen Positionen (S1, S2, S3) angeordnete Lichtquellen (4) aufweist und der Reflektor (7,7',7") eine Vielzahl von Facettenflächen (9), wobei die Richtungen von Lichtstrahlen, die von den Lichtquellen (4) in Richtung der Facettenflächen (9) emittierbar sind, durch die Facettenflächen (9) veränderbar sind und die Lichtquellen (4) durch eine Steuereinheit (6) ansteuerbar sind und dass die Positionen und/oder Ausrichtungen der Facettenflächen (9) relativ zu den Positionen der Lichtquellen (4) so angeordnet sind, dass von der Betrachtungsposition (P) aus zumindest ein von einer ersten Lichtquelle (4-1) emittierter und in seiner Richtung von einer ersten Facettenfläche (9-1) bei einer ersten Facettenposition (F1) veränderter Lichtstrahl (L1-1) sichtbar ist, ein von einer zweiten Lichtquelle (4-2) emittierter und in seiner Richtung von einer zweiten Facettenfläche (9-2) bei einer zweiten Facettenposition (F2) veränderter Lichtstrahl (L2-2) sichtbar ist und ein von einer dritten Lichtquelle (4-3) emittierter und in seiner Richtung von einer dritten Facettenfläche (9-3) bei einer dritten Facettenposition (F2) veränderter Lichtstrahl (3-3) sichtbar ist, wobei die erste, zweite und dritte Facettenposition (F1, F2, F3) jeweils beabstandet voneinander angeordnet sind.

3. Fahrzeugleuchte (1) nach Anspruch 2, **dadurch gekennzeichnet, dass** die Positionen und/oder Ausrichtungen der Facettenflächen (9) relativ zu den Positionen der Lichtquellen (4) so angeordnet sind, dass von der Betrachtungsposition (P) aus ein von der ersten Lichtquelle (4-1) emittierter und in seiner Richtung von einer zu der ersten Facettenfläche (9-1) direkt benachbarten Facettenfläche (9) veränderter Lichtstrahl nicht sichtbar ist, ein von der zweiten Lichtquelle (4-2) emittierter und in seiner Richtung von einer zu der zweiten Facettenfläche (9-2) direkt benachbarten Facettenfläche (9) veränderter Lichtstrahl nicht sichtbar ist und ein von der dritten Lichtquelle (4-3) emittierter und in seiner Richtung von einer zu der dritten Facettenfläche (9-1) direkt benachbarten Facettenfläche (9) veränderter Lichtstrahl nicht sichtbar ist.

4. Fahrzeugleuchte (1, 1', 1') nach einem der vorhergehenden Ansprüche, **dadurch gekennzeichnet, dass** die Lichtquellen (4, 4-1, 4-2, 4-3), deren Lichtstrahlen (L1-1, L1-2, L1-3, L2-1, L2-2, L2-3, L3-1, L3-2, L3-3) am Reflektor (7,7',7") reflektiert werden, eine erste Ausrichtung (A1) und die wenigstens eine weitere Lichtquelle (12), deren Lichtstrahlen durch das wenigstens eine weitere Bauteil (15,15',15") gelangen, eine zweite Ausrichtung (A2) aufweisen, wobei die erste Ausrichtung (A1) in etwa senkrecht zur zweiten Ausrichtung (A2) ausgerichtet ist.

5. Fahrzeugleuchte (1', 1') nach einem der vorhergehenden Ansprüche, **dadurch gekennzeichnet, dass** die Lichtquellen (4, 4-1, 4-2, 4-3), deren Lichtstrahlen (L1-1, L1-2, L1-3, L2-1, L2-2, L2-3, L3-1, L3-2, L3-3) am Reflektor (7,7',7") reflektiert werden, oberhalb des Reflektors (7,7',7") angeordnet sind.

6. Fahrzeugleuchte (1, 1', 1') nach einem der vorhergehenden Ansprüche, **dadurch gekennzeichnet, dass**, dass ein Querschnitt des Reflektors (7, 7',7") eine von der Reflektorfläche (8) gebildete parabolische Linie (I) umfasst und dass die Reflektorfläche (8) durch ein Verschieben der parabolischen Linie (I) auf einer Geraden (A) gebildet ist.

7. Fahrzeugleuchte (1,1') nach einem der vorhergehenden Ansprüche, **dadurch gekennzeichnet, dass** das wenigstens eine weitere, lichtlenkende Bauteil (15,15') in einer Öffnung (70) des Reflektors (7, 7') angeordnet ist.

8. Fahrzeugleuchte (1") nach einem der vorhergehenden Ansprüche 1 bis 6, **dadurch gekennzeichnet, dass** das wenigstens eine weitere, lichtlenkende Bauteil (15") einteilig mit dem Reflektor (7") verbunden ist.

9. Fahrzeugleuchte (1") nach Anspruch 8, **dadurch gekennzeichnet, dass** das wenigstens eine weitere, lichtlenkende Bauteil (15") und der Reflektor (7") als 2K-Bauteil ausgebildet sind.

10. Fahrzeugleuchte (1, 1', 1') nach einem der vorhergehenden Ansprüche, **dadurch gekennzeichnet, dass** das wenigstens eine weitere, lichtlenkende Bauteil (15,15',15") eine Lichtaustrittsseite mit einer Oberfläche (O2) aufweist, die mit einer Oberfläche (O1) des Reflektors (7,7',7") in etwa bündig ist.

11. Kraftfahrzeug (K) mit wenigstens einer Fahrzeugleuchte (1) nach einem der Ansprüche 1 bis 10.

12. Verfahren zum Bereitstellen wenigstens einer Lichtfunktion (LF1) mittels einer Fahrzeugleuchte (1, 1', 1") gemäß einem der Ansprüche 1 bis 10, die zumindest drei bei verschiedenen Positionen angeordnete ersten Lichtquellen (4) aufweist, wobei der Reflektor (7, 7', 7") eine Vielzahl von Facettenflächen (9) umfasst, wobei die Richtungen von Lichtstrahlen, die von den ersten Lichtquellen (4) emittiert wurden und die auf die Facettenflächen (9) treffen, durch die Facettenflächen (9) verändert werden, **dadurch gekennzeichnet, dass** eine Sequenz von Lichtquellen (4) ausgewählt wird, deren Lichtemission aufeinanderfolgend kurzzeitig verändert wird und die Lichtemission der Lichtquellen (4) sequenziell so verändert wird, dass von einer bestimmten, von der Fahrzeugleuchte (1) entfernten Betrachtungsposition (P) aus zumindest zunächst ein von einer ersten Lichtquelle (4-1) emittierter Lichtstrahl (L1-1), dessen Richtung von einer ersten Facettenfläche (9-1) bei einer ersten Facettenposition (F1) verändert wurde, kurzzeitig sichtbar ist, danach ein von einer zweiten Lichtquelle (4-2) emittierter Lichtstrahl (L2-2), dessen Richtung von einer zweiten Facettenfläche (9-2) bei einer zweiten Facettenposition (F2) verändert wurde, kurzzeitig sichtbar ist und anschließend ein von einer dritten Lichtquelle (4-3) emittierter Lichtstrahl (L3-3), dessen Richtung von einer dritten Facettenfläche (9-3) bei einer dritten Facettenposition (F3) verändert wurde, kurzzeitig sichtbar ist, wobei die erste, zweite und dritte Facettenposition (F1, F2, F3) jeweils beabstandet voneinander angeordnet sind und wobei der wenigstens einen Lichtfunktion (LF1) wenigstens eine weitere Lichtfunktion (LF2) überlagert wird, indem wenigstens die weitere, auf einer der Betrachtungsposition (P) abgewandten Seite des Reflektors angeordnete Lichtquelle (12) angesteuert wird, so dass von dieser Lichtquelle (12) emittierte Lichtstrahlen durch wenigstens das lichtlenkende Bauteil (15,15',15") gelangen, welches mit dem Reflektor (7,7',7") verbunden ist und das Bauteil (15,15',15") auf einer der Betrachtungsposition (P) zugewandten Seite des Reflektors (7,7',7") verlassen.

13. Verfahren nach Anspruch 12, **dadurch gekennzeichnet, dass** die Sequenz von Lichtquellen (4) zufällig ausgewählt wird.

## Claims

1. Vehicle light (1, 1', 1") having at least one reflector (7, 7', 7") to which at least one, first light source (4; 4-1, 4-2, 4-3) is allocated, wherein the direction of emitted light beams from the at least one, first light source (4, 4-1, 4-2, 4-3) can be deflected by the reflector (7, 7', 7") in the direction of a specific viewing position (P) remote from the vehicle light (1, 1', 1") in such a manner that at least one, first light function (LF1) can be perceived there, and having at least one, additional light source (12), from which light beams can be emitted, through which, in the viewing position (P), at least one, second light function (LF2) can be perceived, wherein the at least one, additional light source (12) is present on a side, facing away from the viewing position (P), of the reflector (7, 7', 7"), and at least one, additional, light-directing component (15, 15', 15") is arranged between the at least one, additional light source (12) and the reflector (7, 7', 7") and is connected to the reflector (7, 7', 7") in such a way that light beams emitted by the at least one, additional light source (12) pass through the at least one, additional, light-directing component (15, 15', 15") and can leave the light-directing component (15, 15', 15") again in order to implement at least the one, second light function (LF2) on a side, facing the viewing position (P), of the reflector (7, 7', 7"), **characterized in that** the at least one, additional, light-directing component (15, 15', 15") has a light exit side with a surface (O2) that is identical or at least similar to the optical appearance of a surface (01) of the reflector (7, 7', 7") for an observer in the overall optical impression of the vehicle light and that is provided with a metal layer (16) that is dimensioned in thickness such that light beams of the at least one, additional light source (12) can penetrate the metal layer (16).

2. Vehicle light (1, 1', 1") according to claim 1, **characterized in that** the vehicle light (1, 1', 1") has at least three light sources (4) arranged at different positions (S1, S2, S3), and the reflector (7, 7', 7") has a plurality of facet surfaces (9), wherein the directions of light beams that can be emitted by the light sources (4) in the direction of the facet surfaces (9) can be changed by the facet surfaces (9), and the light sources (4) can be controlled by a control unit (6), and **in that** the positions and/or orientations of the facet surfaces (9) are arranged relative to the positions of the light sources (4) in such a way that, from the viewing position (P), at least one light beam (L1-1) emitted from a first light source (4-1) and changed in its direction by a first facet surface (9-1) at a first facet position (F1) is visible, a light beam (L2-2) emitted by a second light source (4-2) and changed in its direction from a second facet surface (9-2) at a second facet position (F2) is visible, and a light beam (3-3) emitted by a third light source (4-3) and changed in its direction from a third facet surface (9-3) at a third facet position (F2) is visible, wherein the first, second, and third facet positions (F1, F2, F3) are each arranged at a distance from one another.

3. Vehicle light (1) according to claim 2, **characterized in that** the positions and/or orientations of the facet surfaces (9) relative to the positions of the light sources (4) are arranged in such a way that, from the viewing position (P), a light beam emitted by the first light source (4-1) and changed in its direction from a facet surface (9) directly adjacent to the first facet surface (9-1) is not visible, a light beam emitted by the second light source (4-2) and changed in its direction from a facet surface (9) directly adjacent to the second facet surface (9-2) is not visible, and a light beam emitted by the third light source (4-3) and changed in its direction from a facet surface (9) directly adjacent to the third facet surface (9-1) is not visible.

4. Vehicle light (1, 1', 1') according to one of the preceding claims, **characterized in that** the light sources (4, 4-1, 4-2, 4-3) whose light beams (L1-1, L1-2, L1-3, L2-1, L2-2, L2-3, L3-1, L3-2, L3-3) are reflected at the reflector (7, 7', 7") have a first orientation (A1), and the at least one, additional light source (12) whose light beams pass through the at least one, additional component (15, 15', 15") has a second orientation (A2), wherein the first orientation (A1) is oriented to be approximately perpendicular to the second orientation (A2).

5. Vehicle light (1', 1') according to one of the preceding claims, **characterized in that** the light sources (4, 4-1, 4-2, 4-3) whose light beams (L1-1, L1-2, L1-3, L2-1, L2-2, L2-3, L3-1, L3-2, L3-3) are reflected at the reflector (7, 7', 7") are arranged above the reflector (7, 7', 7").

6. Vehicle light (1, 1', 1') according to one of the preceding claims, **characterized in that** a cross-section of the reflector (7, 7', 7") comprises a parabolic line (I) formed by the reflector surface (8), and **in that** the reflector surface (8) is formed by shifting the parabolic line (I) on a straight line (A).

7. Vehicle light (1, 1') according to one of the preceding claims, **characterized in that** the at least one, additional, light-directing component (15, 15') is arranged in an opening (70) of the reflector (7, 7').

8. Vehicle light (1") according to one of preceding claims 1 through 6, **characterized in that** the at least one, additional, light-directing component (15") is integrally connected to the reflector (7").

9. Vehicle light (1") according to claim 8, **characterized in that** the at least one, additional, light-directing component (15") and the reflector (7") are formed as a 2K component.

10. Vehicle light (1, 1', 1') according to one of the preceding claims, **characterized in that** the at least one, additional, light-directing component (15, 15', 15") has a light exit side with a surface (O2) that is approximately flush with a surface (01) of the reflector (7, 7', 7").

11. Motor vehicle (K) having at least one vehicle light (1) according to one of claims 1 through 10.

12. Method for providing at least one light function (LF1) by means of a vehicle light (1, 1', 1") according to one of claims 1 through 10, which has at least three, first light sources (4) arranged at different positions, wherein the reflector (7, 7', 7") comprises a plurality of facet surfaces (9), wherein the directions of light beams emitted by the first light sources (4) and incident on the facet surfaces (9) are changed by the facet surfaces (9), **characterized in that** a sequence of light sources (4) is selected, the light emission of which is successively changed for a short time, and the light emission of the light sources (4) is sequentially changed in such a way that, from a specific viewing position (P) remote from the vehicle light (1), at least initially, a light beam (L1-1) emitted by a first light source (4-1), the direction of which beam has been changed from a first facet surface (9-1) at a first facet position (F1), is visible for a short time, thereafter, a light beam (L2-2) emitted by a second light source (4-2), the direction of which beam has been changed by a second facet surface (9-2) at a second facet position (F2), is visible for a short time, and, subsequently, a light beam (L3-3) emitted by a third light source (4-3), the direction of which beam has been changed by a third facet surface (9-3) at a third facet position (F3), is visible for a short time, wherein the first, second, and third facet positions (F1, F2, F3) are each spaced apart from one another, and wherein at least one, additional light function (LF2) is superimposed on the at least one light function (LF1) **in that** at least the additional light source (12) arranged on a side, facing away from the viewing position (P), of the reflector, is controlled, so that light beams emitted by such light source (12) pass through at least the light-directing component (15, 15', 15"), which is connected to the reflector (7, 7', 7"), and leave the component (15, 15', 15") on a side, facing the viewing position (P), of the reflector (7, 7', 7").

13. Method according to claim 12, **characterized in that** the sequence of light sources (4) is randomly selected.

## Revendications

1. Dispositif d'éclairage de véhicule (1, 1', 1") comprenant au moins un réflecteur (7, 7', 7"), auquel est associée au moins une première source lumineuse (4 ; 4-1, 4-2, 4-3), la direction de rayons lumineux émis par l'au moins une source lumineuse (4, 4-1, 4-2, 4-3) pouvant être déviée par le réflecteur (7, *7'*, 7") en direction d'une position d'observation (P) déterminée, éloignée du dispositif d'éclairage de véhicule (1, 1', 1"), de façon à permettre de percevoir, dans cette position, au moins une première fonction lumineuse (LF1) et comprenant au moins une autre source lumineuse (12), de laquelle des rayons lumineux peuvent être émis, lesquels permettent de percevoir au moins une deuxième fonction lumineuse (LF2) dans la position d'observation (P), l'au moins une autre source lumineuse (12) étant placée sur une face opposée à la position d'observation (P) du réflecteur (7, 7', 7"), et au moins un autre composant (15, 15', 15") dirigeant la lumière étant disposé entre l'au moins une autre source lumineuse (12) et le réflecteur (7, 7', 7"), lequel est raccordé au réflecteur (7, 7', 7"), de façon que les rayons lumineux émis par l'au moins une autre source lumineuse (12) traversent l'au moins un autre composant (15, 15', 15") dirigeant la lumière et peuvent quitter de nouveau le composant (15, 15', 15") dirigeant la lumière sur une face opposée à la position d'observation (P) du réflecteur (7, 7', 7") pour réaliser au moins l'une deuxième fonction lumineuse (LF2), **caractérisé en ce que** l'au moins un autre composant (15, 15', 15") dirigeant la lumière présente une face de sortie de lumière avec une telle surface (O2), qui pour un observateur, lors d'une impression optique globale du dispositif d'éclairage de véhicule, est identique ou au moins similaire à l'effet optique d'une surface (O1) du réflecteur (7,7',7") et qui est dotée d'une couche métallique (16), qui est dimensionnée en épaisseur de façon à ce que les rayons lumineux émis par l'au moins une autre source lumineuse (12) puissent traverser la couche métallique (16).

2. Dispositif d'éclairage de véhicule (1, 1',1") selon la revendication 1, **caractérisé en ce qu'**il comprend au moins trois sources lumineuses (4) agencées dans des positions différentes (S1, S2, S3) et le réflecteur (7,7',7") comprend une pluralité de surfaces formant facettes (9), les directions des rayons lumineux, qui peuvent être émis par les sources lumineuses (4) en direction des surfaces formant facettes (9), pouvant être modifiées par les surfaces formant facettes (9) et les sources lumineuses (4) pouvant être commandées par une unité de commande (6), et **en ce que** les positions et/ou orientations des surfaces formant facettes (9) sont disposées par rapport aux positions des sources lumineuses (4) de sorte que, depuis la position d'observation (P), au moins un rayon lumineux (L1-1) émis par une première source lumineuse (4-1) et dont la direction a été modifiée par une première surface formant facette (9-1) dans une première position de facette (F1), soit visible, un rayon lumineux (L2-2) émis par une deuxième source lumineuse (4-2) et dont la direction a été modifiée par une deuxième surface formant facette (9-2) dans une deuxième position de facette (F2) soit visible et un rayon lumineux (3-3) émis par une troisième source lumineuse (4-3) et dont la direction a été modifiée par une troisième surface formant facette (9-3) dans une troisième position de facette (F2) soit visible, les première, deuxième et troisième positions de facette (F1, F2, F3) étant disposées respectivement à distance les unes des autres.

3. Dispositif d'éclairage de véhicule (1) selon la revendication 2, **caractérisé en ce que** les positions et/ou les orientations des surfaces formant facettes (9) sont disposées par rapport aux positions des sources lumineuses (4) de sorte que, depuis la position d'observation (P), un rayon lumineux émis par la première source lumineuse (4-1) et dont la direction a été modifiée par une surface formant facette (9) directement voisine de la première surface formant facette (9-1) ne soit pas visible, un rayon lumineux émis par la deuxième source lumineuse (4-2) et dont la direction a été modifiée par une surface formant facette (9) directement voisine de la deuxième surface formant facette (9-2) ne soit pas visible et un rayon lumineux émis par la troisième source lumineuse (4-3) et dont la direction a été modifiée par une surface formant facette (9) directement voisine de la troisième surface formant facette (9-1) ne soit pas visible.

4. Dispositif d'éclairage de véhicule (1, 1', 1') selon l'une quelconque des revendications précédentes, **caractérisé en ce que** les sources lumineuses (4, 4-1, 4-2, 4-3), dont les rayons lumineux (L1- 1, L1-2, L1-3, L2-1, L2-2, L2-3, L3-1, L3-2, L3-3) sont réfléchis sur le réflecteur (7,7',7"), présentent une première orientation (A1) et l'au moins une autre source lumineuse (12), dont les rayons lumineux traversent l'au moins un autre composant (15, 15', 15"), présente une deuxième orientation (A2), la première orientation (A1) étant dirigée de manière essentiellement perpendiculaire à la deuxième orientation (A2).

5. Dispositif d'éclairage de véhicule (1', 1') selon l'une quelconque des revendications précédentes, **caractérisé en ce que** les sources lumineuses (4, 4-1, 4-2, 4-3), dont les rayons lumineux (L1- 1, L1-2, L1-3, L2-1, L2-2, L2-3, L3-1, L3-2, L3-3) sont réfléchis sur le réflecteur (7, 7', 7"), sont disposées au-dessus du réflecteur (7, 7', 7").

6. Dispositif d'éclairage de véhicule (1, 1', 1') selon l'une quelconque des revendications précédentes, **caractérisé en ce qu'**une section transversale du réflecteur (7, 7',7") comprend une ligne parabolique (I) formée par la surface de réflecteur (8) et **en ce que** la surface de réflecteur (8) est formée par un décalage de la ligne parabolique (I) sur une droite (A).

7. Dispositif d'éclairage de véhicule (1,1') selon l'une quelconque des revendications précédentes, **caractérisé en ce que** l'au moins un autre composant (15, 15') dirigeant la lumière est disposé dans une ouverture (70) du réflecteur (7, 7').

8. Dispositif d'éclairage de véhicule (1") selon l'une quelconque des revendications 1 à 6, **caractérisé en ce que** l'au moins un autre composant (15") dirigeant la lumière est relié d'un seul tenant avec le réflecteur (7").

9. Dispositif d'éclairage de véhicule (1") selon la revendication 8, **caractérisé en ce que** l'au moins un autre composant (15") dirigeant la lumière et le réflecteur (7") sont formés comme un composant 2K.

10. Dispositif d'éclairage de véhicule (1, 1', 1') selon l'une quelconque des revendications précédentes, **caractérisé en ce que** l'au moins un autre composant (15, 15', 15") dirigeant la lumière comprend une face de sortie de lumière avec une surface (O2) qui affleure sensiblement une surface (O1) du réflecteur (7, 7', 7").

11. Véhicule automobile (K) comprenant au moins un dispositif d'éclairage de véhicule (1) selon l'une quelconque des revendications 1 à 10.

12. Procédé de fourniture d'au moins une fonction lumineuse (LF1) au moyen d'un dispositif d'éclairage de véhicule (1, 1', 1") selon l'une quelconque des revendications 1 à 10, qui comprend au moins trois sources lumineuses (4) disposées dans des positions différentes, le réflecteur (7, 7', 7") comprenant une pluralité de surfaces formant facettes (9), les directions de rayons lumineux, qui ont été émis par les premières sources lumineuses (4) et qui sont incidents sur les surfaces formant facettes (9), étant modifiées par les surfaces formant facettes (9), **caractérisé en ce qu'**une séquence de sources lumineuses (4) est choisie, dont l'émission lumineuse est modifiée successivement brièvement et l'émission lumineuse des sources lumineuses (4) est modifiée séquentiellement de sorte que, depuis une position d'observation (P) déterminée, éloignée du dispositif d'éclairage de véhicule (1), au moins d'abord un rayon lumineux (L1-1) émis par une première source lumineuse (4-1), dont la direction a été modifiée par une première surface formant facette (9-1) dans une première position de facette (F1), soit brièvement visible, puis un rayon lumineux (L2-2) émis par une deuxième source lumineuse (4-2), dont la direction a été modifiée par une deuxième surface formant facette (9-2) dans une deuxième position de facette (F2), soit brièvement visible et, enfin, un rayon lumineux (L3-3) émis par une troisième source lumineuse (4-3), dont la direction a été modifiée par une troisième surface formant facette (9-3) dans une troisième position de facette (F3), soit brièvement visible, les première, deuxième et troisième positions de facette (F1, F2, F3) étant disposées respectivement à distance les unes des autres et au moins une autre fonction lumineuse (LF2) étant superposée sur l'au moins une fonction lumineuse (LF1), en commandant l'au moins une autre source lumineuse (12) disposée sur une face opposée à la position d'observation (P) du réflecteur, de sorte que les rayons lumineux émis par cette source lumineuse (12) traversent au moins le composant (15, 15', 15") dirigeant la lumière, lequel est relié au réflecteur (7, 7', 7") et quittent le composant (15, 15', 15") sur une face du réflecteur (7, 7', 7") tournée vers la position d'observation (P).

13. Procédé selon la revendication 12, **caractérisé en ce que** la séquence de sources lumineuses (4) est choisie de manière aléatoire.
